# EUROPEAN PATENT SPECIFICATION

(11) **EP 3 769 569 B1**
(45) Date of publication and mention of the grant of the patent: **06.08.2025**
(21) Application number: 19710189.2
(22) Date of filing: 19.02.2019
(51) Int. Cl.: H04L 5/00, H04L 27/26, H04W 72/51

(54) **WAVEFORM DESIGN AND SIGNALING SUPPORT FOR POSITIONING ENHANCEMENT**
WELLENFORMDESIGN UND SIGNALISIERUNGSTRÄGER ZUR POSITIONSVERBESSERUNG
CONCEPTION DE FORME D'ONDE ET SUPPORT DE SIGNALISATION D'AMÉLIORATION DE POSITIONNEMENT

(30) Priority: 23.03.2018 US 201862647618 P; 15.02.2019 US 201916277671
(43) Date of publication of application: 27.01.2021
(73) Proprietor: QUALCOMM Incorporated, San Diego, CA 92121-1714 (US)
(72) Inventor: LEI, Jing, San Diego, California 92121-1714 (US); WANG, Renqiu, San Diego, California 92121-1714 (US); CHEN, Wanshi, San Diego, California 92121-1714 (US); XU, Huilin, San Diego, California 92121-1714 (US); TOKGOZ, Yeliz, San Diego, California 92121-1714 (US); ANG, Peter Pui Lok, San Diego, California 92121-1714 (US)
(74) Representative: Tomkins & Co
(86) International application number: PCT/US2019/018578
(87) International publication number: WO 2019/182707

(56) References cited:
- EP-B1- 3 320 703
- US-A1- 2012 302 201
- US-A1- 2014 349 582
- US-A1- 2015 133 157
- US-A1- 2015 296 359
- US-A1- 2017 142 682

## Description

### BACKGROUND

### Technical Field

The present disclosure relates generally to communication systems, and more particularly, to methods and apparatus related to waveform design and signaling support for positioning enhancement.

### Introduction

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, Cyclic-Prefix orthogonal frequency division multiplexing (CP-OFDM), and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra reliable low latency communications (URLLC). Some aspects of 5G NR may be based on the 4G Long Term Evolution (LTE) standard. There exists a need for further improvements in 5G NR technology. These improvements may also be applicable to other multi-access technologies and the telecommunication standards that employ these technologies.// Insert Page 2A//

### SUMMARY

A method of wireless communication of a user equipment in a New Radio based communication system is provided in claim 1. A corresponding user equipment is claimed in claim 9. A method of wireless communication of a base station in accordance with the present invention is claimed in claim 10. A corresponding apparatus is claimed in claim 12.

In some communication systems, one or more types of reference signals are defined and employed for positioning purposes. Due to the unique requirements and/or constraints of NR based communication that are different than other systems such as LTE, different signals are needed for positioning in NR. Aspects presented herein provide for signals that can be used for positioning in NR based communication that meet the unique requirements of NR based communication. Aspects presented herein facilitate high accuracy position determination by devices (e.g., low powered devices) operating in the system that may not have inbuilt positioning/navigation circuitry (e.g., global position system) by providing for a new type of positioning reference signal. Aspects presented herein may provide for positioning reference signals (PRS) that improve higher accuracy positioning in new radio-internet of things (NR-IoT), for example.

As presented herein, a user equipment (UE) may transmit an indication of positioning requirement and/or capability information of the UE to a base station. The base station may respond to receipt of the positioning requirement/capability information from the UE by configuring parameters associated with a PRS based on the unique requirement(s)/capability(s) of the UE. After configuring the PRS based on received
US2014/0349582 A1 discloses a positioning method for a user equipment, a data sending method, a device and a user equipment. After receiving a positioning service trigger, the method comprises: acquiring a velocity estimate of a UE to be positioned; selecting configuration information of a PRS according to the velocity estimate, setting a PRS sending period of an evolved base station eNB, and sending the PRS sending period to the eNB; sending the configuration information of the PRS to the UE, enabling the UE to receive the PRS sent by the eNB according to the configuration of the PRS and estimate a measurement of RSTD; and receiving the measurement of RSTD sent by the UE, and calculating a geographic position of the UE according to the measurement of RSTD. The embodiments of the disclosure improve effectively the accuracy of positioning the user equipment.
US2015/0133157 A1 discloses a positioning method, a control device, and a mobile communications system. A control device receives a first positioning measurement parameter used for positioning a user equipment (UE). The first positioning measurement parameter is received through one communications system interface or multiple communications system interfaces among N communications system interfaces supported by the control device. The control device positions the UE according to the received first positioning measurement parameter.
positioning requirement and/or capability information, the base station transmits the PRS to the UE. The configured parameters may include any combination of a waveform type of the PRS, resources on which the PRS will be transmitted, numerology associated with the PRS, bandwidth associated with the PRS, precoding associated with the PRS, or periodicity associated with the PRS. The UE may receive the PRS having the configured parameters and may use the received PRS for positioning purposes.

In an aspect of the disclosure, a method, a computer-readable medium, and an apparatus are provided. The apparatus, e.g., a UE, may be configured to transmit an indication of at least one of a positioning requirement or capability information of the UE. The apparatus may be further configured to receive a PRS (e.g., a NR-PRS) having parameters configured based on at least one of the positioning requirement or the capability information of the UE, wherein the configured parameters include one or more of a waveform type of the NR-PRS, resources on which the NR-PRS will be transmitted, numerology associated with the NR-PRS, bandwidth associated with the NR-PRS, precoding associated with the NR-PRS, or periodicity associated with the NR-PRS. In some configurations, the apparatus may be further configured to perform at least one of UE positioning, ranging, or a UE velocity determination using the received NR-PRS.

In another aspect of the disclosure, a method, a computer-readable medium, and an apparatus are provided. The apparatus (e.g., a base station) may be configured to receive at least one of a positioning requirement or capability information of at least one device that needs to perform a positioning operation. The apparatus may be further configured to configure parameters associated with a NR-PRS based on at least one of the positioning requirement or the capability information, wherein configuring the parameters includes configuring one or more of a waveform type of the NR-PRS, resources on which the NR-PRS will be transmitted, numerology associated with the NR-PRS, bandwidth associated with the NR-PRS, precoding associated with the NR-PRS, or periodicity associated with the NR-PRS. In some configurations, the apparatus may be further configured to transmit the NR-PRS having the configured parameters.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a diagram illustrating an example of a wireless communications system and an access network.
FIGs. 2A, 2B, 2C, and 2D are diagrams illustrating examples of a first 5G/NR frame, DL channels within a 5G/NR subframe, a second 5G/NR frame, and UL channels within a 5G/NR subframe, respectively.
FIG. 3 is a diagram illustrating an example of a base station and user equipment (UE) in an access network.
FIG. 4A includes various diagrams illustrating different bandwidth configurations of a PRS in one example.
FIG. 4B includes diagrams illustrating different example placements of PRS in a resource grid.
FIG. 5 illustrates an example of communication and signaling exchange between a base station (e.g., gNB) and one or more UEs (e.g., NR-IoT types devices) in accordance with one example configuration.
FIG. 6 is a flowchart of a method of wireless communication of a base station.
FIG. 7 is a flowchart of a method of wireless communication of a UE.
FIG. 8 is a conceptual data flow diagram illustrating the data flow between different means/components in an example apparatus, e.g., a base station.
FIG. 9 is a diagram illustrating an example of a hardware implementation for an apparatus employing a processing system.
FIG. 10 is a conceptual data flow diagram illustrating the data flow between different means/components in an example apparatus, e.g., a UE.
FIG. 11 is a diagram illustrating an example of a hardware implementation for an apparatus employing a processing system.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

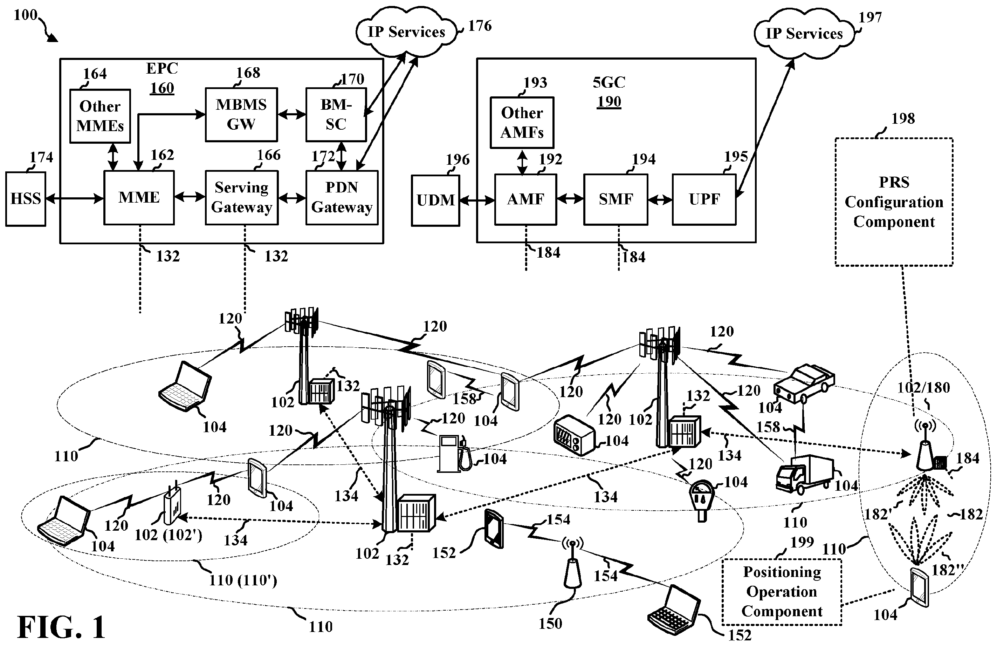

FIG. 1 is a diagram illustrating an example of a wireless communications system and an access network 100. The wireless communications system (also referred to as a wireless wide area network (WWAN)) includes base stations 102, UEs 104, an Evolved Packet Core (EPC) 160, and core network 190 (e.g., a 5G Core (5GC)). The base stations 102 may include macrocells (high power cellular base station) and/or small cells (low power cellular base station). The macrocells include base stations. The small cells include femtocells, picocells, and microcells.

The base stations 102 configured for 4G LTE (collectively referred to as Evolved Universal Mobile Telecommunications System (UMTS) Terrestrial Radio Access Network (E-UTRAN)) may interface with the EPC 160 through backhaul links 132 (e.g., S1 interface). The base stations 102 configured for 5G NR (collectively referred to as Next Generation RAN (NG-RAN)) may interface with core network 190 through backhaul links 184. In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160 or core network 190) with each other over backhaul links 134 (e.g., X2 interface). The backhaul links 134 may be wired or wireless.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102 / UEs 104 may use spectrum up to YMHz (e.g., 5, 10, 15, 20, 100, 400, etc. MHz) bandwidth per carrier allocated in a carrier aggregation of up to a total of *Yx* MHz (x component carriers) used for transmission in each direction. The carriers may or may not be adjacent to each other. Allocation of carriers may be asymmetric with respect to DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, FlashLinQ, WiMedia, Bluetooth, ZigBee, Wi-Fi based on the IEEE 802.11 standard, LTE, or NR.

The wireless communications system may further include a Wi-Fi access point (AP) 150 in communication with Wi-Fi stations (STAs) 152 via communication links 154 in a 5 GHz unlicensed frequency spectrum. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same 5 GHz unlicensed frequency spectrum as used by the Wi-Fi AP 150. The small cell 102', employing NR in an unlicensed frequency spectrum, may boost coverage to and/or increase capacity of the access network.

A base station 102, whether a small cell 102' or a large cell (e.g., macro base station), may include an eNB, gNodeB (gNB), or another type of base station. Some base stations, such as gNB 180 may operate in a traditional sub 6 GHz spectrum, in millimeter wave (mmW) frequencies, and/or near mmW frequencies in communication with the UE 104. When the gNB 180 operates in mmW or near mmW frequencies, the gNB 180 may be referred to as an mmW base station. Extremely high frequency (EHF) is part of the RF in the electromagnetic spectrum. EHF has a range of 30 GHz to 300 GHz and a wavelength between 1 millimeter and 10 millimeters. Radio waves in the band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW / near mmW radio frequency band (e.g., 3 GHz - 300 GHz) has extremely high path loss and a short range. The mmW base station 180 may utilize beamforming 182 with the UE 104 to compensate for the extremely high path loss and short range.

The base station 180 may transmit a beamformed signal to the UE 104 in one or more transmit directions 182'. The UE 104 may receive the beamformed signal from the base station 180 in one or more receive directions 182". The UE 104 may also transmit a beamformed signal to the base station 180 in one or more transmit directions. The base station 180 may receive the beamformed signal from the UE 104 in one or more receive directions. The base station 180 / UE 104 may perform beam training to determine the best receive and transmit directions for each of the base station 180 / UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include a Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the AMF 192 provides QoS flow and session management. All user Internet protocol (IP) packets are transferred through the UPF 195. The UPF 195 provides UE IP address allocation as well as other functions. The UPF 195 is connected to the IP Services 197. The IP Services 197 may include the Internet, an intranet, an IP Multimedia Subsystem (IMS), a PS Streaming Service, and/or other IP services.

The base station may also be referred to as a gNB, Node B, evolved Node B (eNB), an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

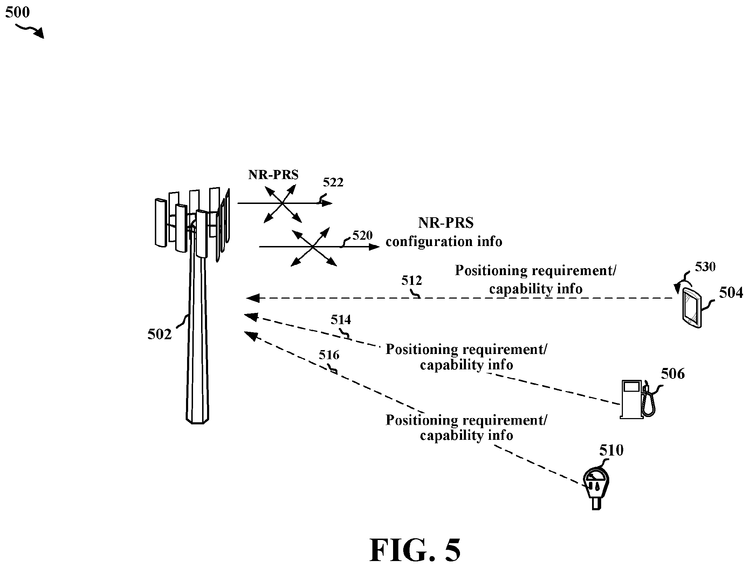

Referring again to FIG. 1, in certain aspects, the base station 180 may include a PRS configuration component 198 which is configured to receive at least one of a positioning requirement or capability information of at least one device (e.g., UE 104) that needs to perform a positioning operation, configure parameters associated with a NR-PRS based on at least one of the positioning requirement or the capability information, and transmit the NR-PRS having the configured parameters. In certain configurations, the UE 104 may include a positioning operation component 199 which is configured, upon the UE determining that a positioning operation is requested, to transmit an indication of at least one of a positioning requirement or capability information of the UE, and receive a NR-PRS having parameters configured based on the positioning requirement or the capability information of the UE. Further related aspects and features are described in more detail in connection with FIGs. 5-11. In one configuration, the positioning operation component 199 may be configured to perform at least one of UE positioning, ranging, or a UE velocity determination based on the received NR-PRS. In one configuration, the configured parameters may include one or more of a waveform type of the NR-PRS, resources on which the NR-PRS will be transmitted, numerology associated with the NR-PRS, bandwidth associated with the NR-PRS, precoding associated with the NR-PRS, or periodicity associated with the NR-PRS.

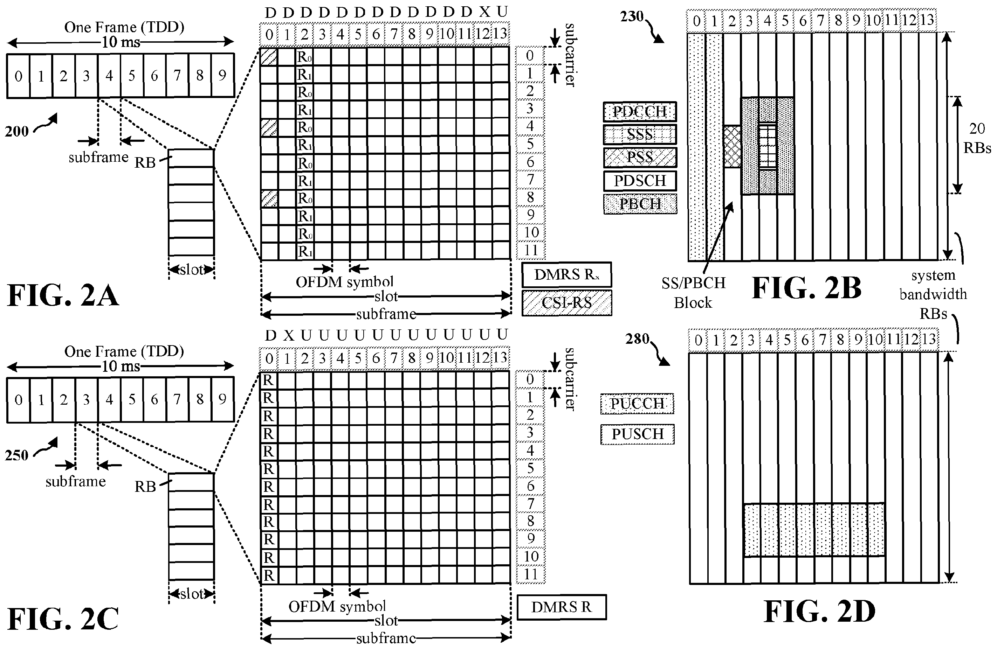

FIG. 2A is a diagram 200 illustrating an example of a first subframe within a 5G/NR frame structure. FIG. 2B is a diagram 230 illustrating an example of DL channels within a 5G/NR subframe. FIG. 2C is a diagram 250 illustrating an example of a second subframe within a 5G/NR frame structure. FIG. 2D is a diagram 280 illustrating an example of UL channels within a 5G/NR subframe. The 5G/NR frame structure may be FDD in which for a particular set of subcarriers (carrier system bandwidth), subframes within the set of subcarriers are dedicated for either DL or UL, or may be TDD in which for a particular set of subcarriers (carrier system bandwidth), subframes within the set of subcarriers are dedicated for both DL and UL. In the examples provided by FIGs. 2A, 2C, the 5G/NR frame structure is assumed to be TDD, with subframe 4 being configured with slot format 28 (with mostly DL), where D is DL, U is UL, and X is flexible for use between DL/UL, and subframe 3 being configured with slot format 34 (with mostly UL). While subframes 3, 4 are shown with slot formats 34, 28, respectively, any particular subframe may be configured with any of the various available slot formats 0-61. Slot formats 0, 1 are all DL, UL, respectively. Other slot formats 2-61 include a mix of DL, UL, and flexible symbols. UEs are configured with the slot format (dynamically through DL control information (DCI), or semi-statically/statically through radio resource control (RRC) signaling) through a received slot format indicator (SFI). Note that the description *infra* applies also to a 5G/NR frame structure that is TDD.

Other wireless communication technologies may have a different frame structure and/or different channels. A frame (10 ms) may be divided into 10 equally sized subframes (1 ms). Each subframe may include one or more time slots. Subframes may also include mini-slots, which may include 7, 4, or 2 symbols. Each slot may include 7 or 14 symbols, depending on the slot configuration. For slot configuration 0, each slot may include 14 symbols, and for slot configuration 1, each slot may include 7 symbols. The symbols on DL may be cyclic prefix (CP) OFDM (CP-OFDM) symbols. The symbols on UL may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission). The number of slots within a subframe is based on the slot configuration and the numerology. For slot configuration 0, different numerologies µ 0 to 5 allow for 1, 2, 4, 8, 16, and 32 slots, respectively, per subframe. For slot configuration 1, different numerologies 0 to 2 allow for 2, 4, and 8 slots, respectively, per subframe. Accordingly, for slot configuration 0 and numerology µ, there are 14 symbols/slot and 2^{µ} slots/subframe. The subcarrier spacing and symbol length/duration are a function of the numerology. The subcarrier spacing may be equal to 2*^{µ}* * 15 *kKz,* where *µ* is the numerology 0 to 5. As such, the numerology µ=0 has a subcarrier spacing of 15 kHz and the numerology µ=5 has a subcarrier spacing of 480 kHz. The symbol length/duration is inversely related to the subcarrier spacing. FIGs. 2A-2D provide an example of slot configuration 0 with 14 symbols per slot and numerology µ=0 with 1 slot per subframe. The subcarrier spacing is 15 kHz and symbol duration is approximately 66.7 *µ*s.

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in FIG. 2A, some of the REs carry reference (pilot) signals (RS) for the UE. The RS may include demodulation RS (DM-RS) (indicated as Rₓ for one particular configuration, where 100x is the port number, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

FIG. 2B illustrates an example of various DL channels within a subframe of a frame. The physical downlink control channel (PDCCH) carries DCI within one or more control channel elements (CCEs), each CCE including nine RE groups (REGs), each REG including four consecutive REs in an OFDM symbol. A primary synchronization signal (PSS) may be within symbol 2 of particular subframes of a frame. The PSS is used by a UE 104 to determine subframe/symbol timing and a physical layer identity. A secondary synchronization signal (SSS) may be within symbol 4 of particular subframes of a frame. The SSS is used by a UE to determine a physical layer cell identity group number and radio frame timing. Based on the physical layer identity and the physical layer cell identity group number, the UE can determine a physical cell identifier (PCI). Based on the PCI, the UE can determine the locations of the aforementioned DM-RS. The physical broadcast channel (PBCH), which carries a master information block (MIB), may be logically grouped with the PSS and SSS to form a synchronization signal (SS)/PBCH block. The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. Although not shown, the UE may transmit sounding reference signals (SRS). The SRS may be used by a base station for channel quality estimation to enable frequency-dependent scheduling on the UL.

FIG. 2D illustrates an example of various UL channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and HARQ ACK/NACK feedback. The PUSCH carries data, and may additionally be used to carry a buffer status report (BSR), a power headroom report (PHR), and/or UCI.

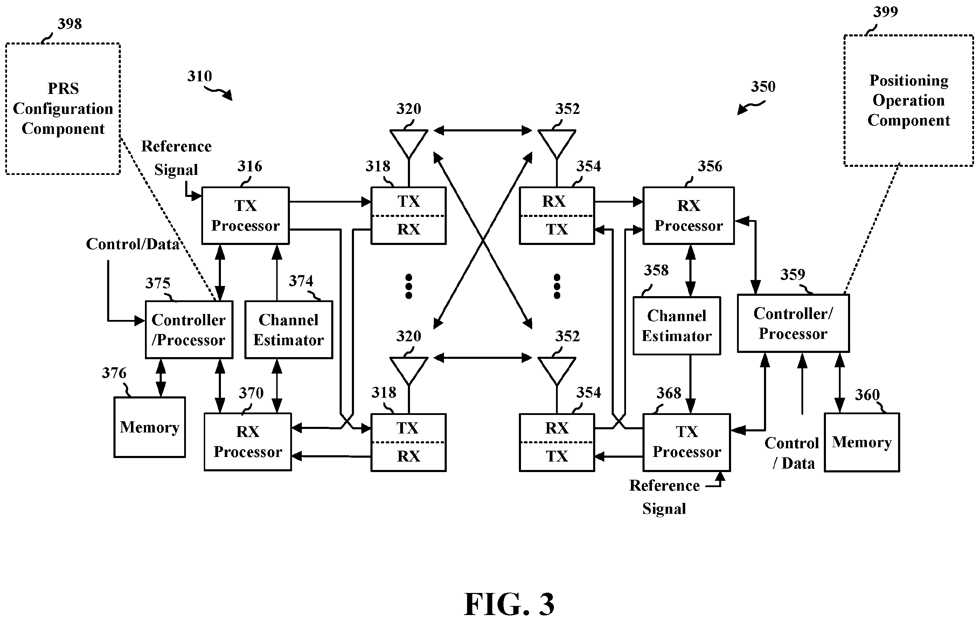

FIG. 3 is a block diagram of a base station 310 in communication with a UE 350 in an access network. In the DL, IP packets from the EPC 160 may be provided to a controller/processor 375. The controller/processor 375 implements layer 3 and layer 2 functionality. Layer 3 includes a radio resource control (RRC) layer, and layer 2 includes a service data adaptation protocol (SDAP) layer, a packet data convergence protocol (PDCP) layer, a radio link control (RLC) layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream may then be provided to a different antenna 320 via a separate transmitter 318TX. Each transmitter 318TX may modulate an RF carrier with a respective spatial stream for transmission.

At the UE 350, each receiver 354RX receives a signal through its respective antenna 352. Each receiver 354RX recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 310. These soft decisions may be based on channel estimates computed by the channel estimator 358. The soft decisions are then decoded and deinterleaved to recover the data and control signals that were originally transmitted by the base station 310 on the physical channel. The data and control signals are then provided to the controller/processor 359, which implements layer 3 and layer 2 functionality.

The controller/processor 359 can be associated with a memory 360 that stores program codes and data. The memory 360 may be referred to as a computer-readable medium. In the UL, the controller/processor 359 provides demultiplexing between transport and logical channels, packet reassembly, deciphering, header decompression, and control signal processing to recover IP packets from the EPC 160. The controller/processor 359 is also responsible for error detection using an ACK and/or NACK protocol to support HARQ operations.

Similar to the functionality described in connection with the DL transmission by the base station 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by the base station 310 may be used by the TX processor 368 to select the appropriate coding and modulation schemes, and to facilitate spatial processing. The spatial streams generated by the TX processor 368 may be provided to different antenna 352 via separate transmitters 354TX. Each transmitter 354TX may modulate an RF carrier with a respective spatial stream for transmission.

The UL transmission is processed at the base station 310 in a manner similar to that described in connection with the receiver function at the UE 350. Each receiver 318RX receives a signal through its respective antenna 320. Each receiver 318RX recovers information modulated onto an RF carrier and provides the information to a RX processor 370.

The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover IP packets from the UE 350. IP packets from the controller/processor 375 may be provided to the EPC 160. The controller/processor 375 is also responsible for error detection using an ACK and/or NACK protocol to support HARQ operations.

In certain aspects, the controller/processor 375 of base station 310 may include a PRS configuration component 398 which is configured to receive at least one of a positioning requirement or capability information of at least one device (e.g., UE 350) that needs to perform a positioning operation, configure parameters associated with a NR-PRS based on at least one of the positioning requirement or the capability information, and transmit the NR-PRS having the configured parameters. In other aspects, the controller/processor 359 of UE 350 may include a positioning operation component 399 which is configured, upon the UE determining that a positioning operation is requested, to transmit an indication of at least one of a positioning requirement or capability information of the UE, and receive a NR-PRS having parameters configured based on the positioning requirement or the capability information of the UE.

Positioning may be useful in connection with emergency calls and other services, as well as many other additional uses and applications, e.g., in connection with LTE based communication including IoT use cases. For example, positioning may be useful in connection with wearable devices, transportation applications, autonomous vehicles, asset tracking, and environmental sensing and monitoring. Applications involving positions may also be helpful for NR based communication. For example, in NR systems, position information could be helpful to support NR massive machine type communications (mMTC) and NR-IoT devices. For example, high-accuracy positioning may be helpful in autonomous vehicle systems and related applications where the vehicles must know their position with relatively high accuracy as well as the positions of near-by vehicles for collision avoidance. In factory automation scenarios, the positions of various items such as work items under processing on a manufacturing floor, forklifts, or parts to be assembled in an assembly unit may also need to be known.

NR mMTC use cases may be categorized into different classes - low end (*e.g.* very low power device communications) and medium-to-high end (*e.g.* low power device communications such as wearable devices). NR IoT may target the medium-to-high end category with different key performance indicators (KPIs) from low power wide area (LPWA), such as higher data rates, higher positioning accuracy, higher mobility, tighter latency, and/or higher connectivity density.

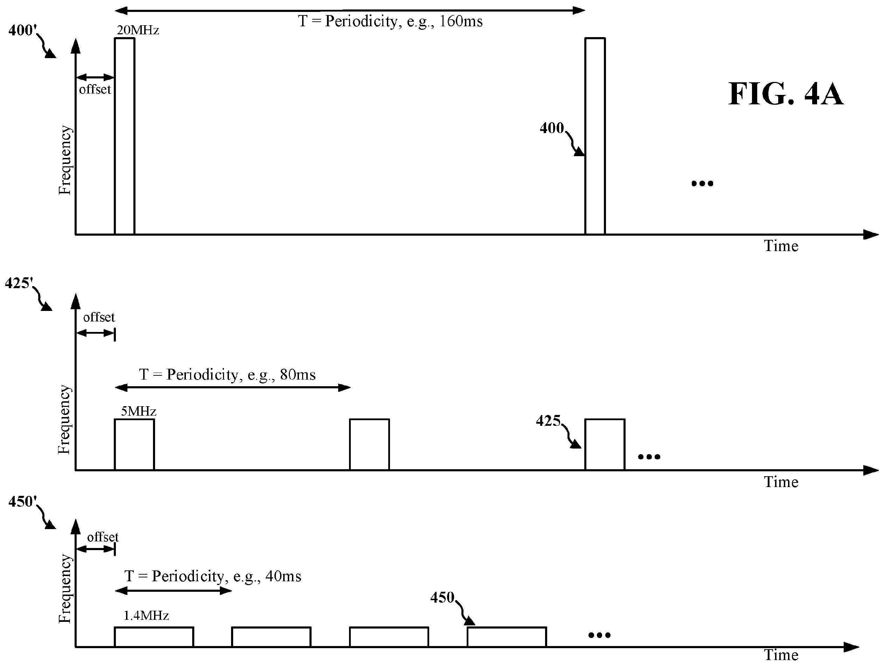

In LTE, a combination of positioning reference signal (PRS)/narrowband PRS (NPRS) and cell specific RS (CRS)/narrowband RS (NRS) may be employed to improve positioning accuracy of low end IoT devices. A PRS may be delivered with a predefined bandwidth and other configuration parameters such as periodicity, duration, subframe offset, and muting pattern. A PRS may be transmitted in one or more pre-defined positioning subframes which may be grouped as consecutive subframes and referred to as positioning occasions. Positioning occasions occur periodically with a certain periodicity. In LTE, various PRS bandwidth configurations are possible. For example, a 1.4MHz PRS, a 3MHz PRS, a 5MHz PRS, a 10MHz PRS, a 15MHz PRS, and a 20MHz PRS. Various different PRS configurations may have different associated periodicities, for example, 20 MHz PRS with a 160ms periodicity, 5MHz PRS with a 80ms periodicity, and 1.4MHz PRS with a 40ms periodicity as illustrated in the example shown in FIG. 4A.

FIG. 4A includes various diagrams illustrating different bandwidth and periodicity configurations of a PRS. Diagram 400' illustrates a first example where a PRS 400 of bandwidth 20 MHz is shown having an associated periodicity of 160ms. Diagram 425' of FIG. 4A illustrates a second example where a PRS 425 of bandwidth 5 MHz is shown having an associated periodicity of 80ms. Diagram 450' of FIG. 4A illustrates a third example where a PRS 450 of bandwidth 1.4 MHz is shown having an associated periodicity of 40ms. FIG. 4A illustrates examples 400', 425', and 450' in which the PRS may be transmitted using an offset in time from a reference offset. As an example, of an offset in time, a subframe offset may be configured that defines a starting subframe of a PRS transmission relative to a starting point of a system frame cycle. In other examples, an offset in time might not be used.

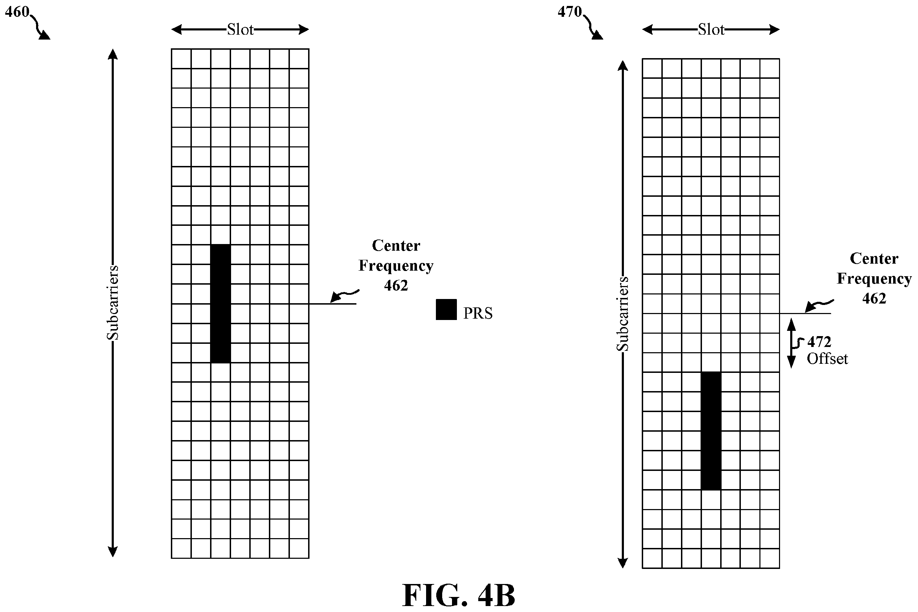

For non-IoT cases, the PRS may be centered around the carrier frequency. For example, referring to FIG. 4B, diagram 460 illustrates an example of one possible placement of PRS (*e.g.* PRS 400, 425, or 450) that may be centered around a center carrier frequency 462 and occupying various resource elements in a slot of a resource grid. However, for IoT cases, the PRS may be shifted by a pre-configured frequency offset. For example, diagram 470 illustrates an example of another possible placement of PRS (*e.g.* PRS 400, 425, or 450) where the PRS of diagram 470 may be shifted from the center frequency 462 by a frequency offset 472. The offset may be pre-configured by, *e.g.,* a base station, and provides flexibility for base station positioning and UE monitoring of PRS in multiple bands. With regard to PRS periodicity configuration, for non-IoT cases, all repetitions of PRS may use the same bandwidth, whereas for IoT cases, more repetitions may be used to support coverage extension.

In some cases, a muting pattern may be implemented to reduce interference. For example, to reduce inter-cell interference for PRS reception, some of the PRS subframes can be set as blank. That is, base stations may be configured to apply time-based muting/blanking, which is also referred to as PRS muting. For example, a UE may receive PRS from a plurality of neighboring cells. In order to allow the UE to clearly detect the PRS from different cells, a muting pattern may be configured according to which different base stations (corresponding to neighboring cells) mute their respective PRS, e.g., with different base stations muting their PRS at different times. When a strong PRS signal is muted, the weak PRS signals from the neighbor cells are more easily detected by the UE. The PRS muting configuration of a cell may be defined by a periodic muting sequence.

While a combination of PRS/NPRS and CRS/NRS may be employed in LTE for positioning purposes, NR has different requirements than LTE. Furthermore, NR does not include the reference signal types used for positioning in LTE. For example, NR does not have RS types corresponding to PRS/NPRS/CRS/NRS. Furthermore, the existing reference signals defined for 4G LTE may not work well for positioning, e.g., might not provide high accuracy positioning, in NR systems. Due to the unique requirements of NR, different signals are needed for positioning in NR based communication. Accordingly, there is a need for signals which are well suited for positioning and ranging in NR-compliant communication systems. Thus, positioning reference signals that improve higher accuracy positioning in NR-IoT may be especially desirable.

In the following discussion, various aspects and features related to waveform design and signaling support for positioning enhancement in NR-IoT are described. In an aspect, new waveforms for positioning reference signals that are well suited for NR systems and NR-IoT (referred to herein as NR-PRS) are described. The proposed new waveforms for NR-PRS discussed herein may be useful for multiple purposes, for example, enhancing ranging service (e.g., Observed Time Difference Of Arrival (OTDOA)), supporting UE grouping and power multiplexing in NR-non orthogonal multiple access (NOMA) operations, enhancing velocity estimation and assisting mobility management.

In addition, various aspects described herein relate to signaling support for "on-demand" positioning services. For example, in some configuration, a NR-PRS may be transmitted by a base station when one or more UEs (e.g., NR-IoT devices) request to perform positioning and indicate positioning requirements to the base station on demand. Some aspects described herein relate to dynamic configurations of NR-PRS to support different NR-IoT use cases. For example, parameters associated with a PRS such as numerology (e.g., subcarrier spacing, cyclic prefix), repetition, and bandwidth of the PRS, may be dynamically configured based on the requirements/capability of one or more devices that request PRS. Furthermore, in some configurations, beamforming, use of transmit (TX) diversity and multi-cell cooperation for PRS transmission may be considered.

On the UE side, the measurement accuracy (e.g., in position measurement) for target cell and relative velocity may depend on the type of transmitted waveform (e.g., of the reference signal) and the configuration of the associated parameters. Thus, it may be appreciated that in order to enhance positioning accuracy, a proper waveform design with well configured parameters suitable for high accuracy positioning is desirable. An important goal of waveform design may be to achieve a localized ambiguity function in the corresponding delay-Doppler space. This may be achieved by forming a sharp main lobe and suppressed side lobes in a delay-Doppler region of interest. In one aspect, the proposed new waveform design for the NR-PRS considers new sequences and dynamic configuration of a Cyclic-Prefix Orthogonal Frequency Division Multiplexing (CP-OFDM) waveform. In one configuration, an NR-PRS may have a CP-OFDM waveform comprising discrete linear frequency modulation sequences with a configurable slope and initial frequency. In another configuration, the NR-PRS may have a CP-OFDM waveform that comprises a multi-carrier phase coded constant amplitude zero autocorrelation (CAZAC) sequence. In another configuration, the NR-PRS may have a CP-OFDM waveform that comprises a concatenation of chirp sequences in time and/or frequency domain. In another configuration, the NR-PRS may have a CP-OFDM waveform that comprises a frequency multiplexed sequence of complementary waveforms, such as Golay sequences. In one example, the NR-PRS waveform may be selected among a plurality of these example waveform types.

Furthermore, in accordance with one aspect, for a given cell, various parameters of the NR-PRS may be dynamically configured based on positioning requirements (e.g., a positioning accuracy) and/or capabilities of NR-IoT devices. For example, in some configurations, parameters such as resources on which the NR-PRS will be transmitted, a numerology associated with the NR-PRS, a bandwidth associated with the NR-PRS, a precoding associated with the NR-PRS, a periodicity associated with the NR-PRS, a muting pattern, and a frequency hopping pattern may be adapted for a particular NR-PRS to accommodate different positioning accuracy and capabilities of NR-IoT devices.

Various features related to signaling support for NR-PRS are also described. In accordance with one aspect, the positioning requirements of different NR-IoT use cases may be classified into K different levels, for example P₁, P₂, ..., P_{K}. Each level may be characterized based on parameters associated with at least one of a ranging accuracy, velocity determination support, and a bandwidth (e.g., a bandwidth supported by a NR-IoT device and/or a bandwidth requested for the NR-PRS). Positioning requirement levels may be quantized, and one or more devices that may have similar positioning requirements and capabilities (e.g., bandwidth support) may be associated with the same positioning requirement level. Thus, the UEs may be grouped for purposes of the NR-PRS. Thus, for example, devices having similar requirements with respect to positioning/ranging accuracy, velocity determination support, and/or supported bandwidth may select the same positioning requirement level to convey their positioning requirements to the base station. The positioning requirement level (or simply the positioning requirement) may be conveyed to the base station (e.g., by each device) via a bitmap. Thus, as many different bitmaps may be defined as the number of different positioning requirement levels. In some configurations, a bitmap of a positioning requirement level Pₘ (1≤m≤K) may be carried by PUCCH. In some other configurations, the bitmap may be conveyed as a group index in a scheduling request (SR)/PRACH selection. While some examples of indicating the positioning requirement via a bitmap are provided, it should be appreciated that the positioning requirement and/or capability information may be signaled to the base station in other ways.

On the network side, based on the positioning requirement level Pₘ of at least one UE, the base station (e.g., gNB) may dynamically configure the parameters (e.g., resources, numerology, waveform, precoding, etc.) of a NR-PRS to be transmitted, and signal the configuration information to UE(s), e.g., via PDCCH and/or PDSCH. In some configurations, while the configuration information for NR-PRS may be transmitted in a PDSCH, a grant for the PDSCH may be transmitted via a group common PDCCH. Thus, the configuration information may be transmitted to multiple UEs in a PDCCH/PDSCH common to the group of UEs having the same positioning requirement level Pₘ.

In one configuration, for NR-IoT devices with limited bandwidth capability (e.g. ~5 MHz), a dynamic muting pattern may be configured, e.g., in a time domain, to reduce inter-cell interference of NR-PRS reception. In one configuration, for NR-IoT devices in support of wider bandwidths (e.g. ≥20 MHz), a sub-band based PRS hopping pattern can be configured in a frequency domain. The frequency hopping may supplement a muting pattern in the time domain. Such an approach may add frequency diversity for PRS and also facilitates interference reduction.

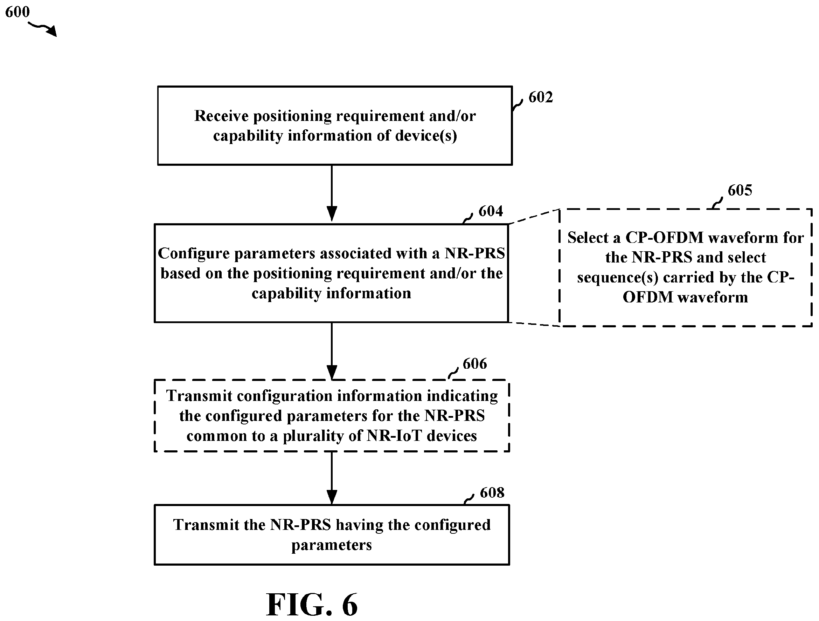

To facilitate an understanding of the proposed methods and techniques, an example of communication between a base station and one or more UEs, some of which may be NR-IoT type devices, is discussed with reference to FIG. 5. Various additional features are also discussed in connection with FIG. 5 and the flowcharts of FIGs. 6-7.

FIG. 5 is a diagram 500 illustrating an example of communication and signaling exchange between a base station 502 (e.g., gNB) and a plurality of UEs including UE 504, UE 506, and UE 510 in accordance with one example configuration. The base station 502 and the UEs 504, 506, 510 may be a part of the system and access network of FIG. 1. For example, the base station 502 may be the base station 180/102 and the UEs 504, 506, 510 may correspond to UEs 104 of FIG. 1. In some configurations, the base station 502 and the UEs 504, 506, 510 support and communicate in accordance with the NR standard. In some aspects, at least some of the UEs 504, 506, and 510 are NR-IoT type devices and support further enhanced machine type communications (FeMTC) and/or massive MTC (mMTC). Various aspects and features related to waveform design and signaling support for positioning enhancement in NR-IoT are discussed with reference to FIG. 5.

In various configurations, signaling support for on-demand positioning services is provided. For example, in such configurations, the base station 502 may transmit an NR-PRS (e.g. NR-PRS 400, 425, or 450) when one or more of the UEs 504, 506, and 510 request positioning assistance. For example, the UE may request positioning assistance, e.g., by signaling positioning requirements (e.g. a positioning accuracy, ranging accuracy or velocity determination support required for an application) to the base station 502. In another example, a request for positioning assistance may be signaled separately from positioning requirements. In addition to signaling positioning requirements to the base station 502 to trigger PRS transmission, a UE may also indicate capability information of the UE *(e.g.* the UE's supported operating bandwidth and power limitations) to the base station 502. As illustrated in the example depicted in FIG. 5, the UEs 504, 506, and 510 may each transmit an indication (e.g., illustrated by arrows 512, 514, 516) of its positioning requirements and/or capability information to the base station 502.

In another aspect, the positioning requirements may be indicated by a positioning requirement level. As discussed *supra,* the positioning requirements of different NR-IoT use cases may be classified into different levels, (e.g., P₁, P₂, ..., P_{K}) which may be known to the UEs 504, 506, and 510. Each level may be characterized at least by parameters associated with a ranging accuracy, a velocity determination support, and a bandwidth. For example, each different level may be associated with a set of parameters that indicate a positioning/ranging accuracy for that level, whether velocity determination support is requested, and a bandwidth (e.g., supported by devices that correspond to the given level). Positioning requirement levels may be quantized, and one or more UEs that may have similar positioning requirements may be associated with the same positioning requirement level. However, UEs with different positioning requirements may select different corresponding positioning requirement levels in accordance with their respective positioning needs and capabilities (e.g., select a level matching their respective requirements). Each of the UEs 504, 506, 510 may convey its positioning requirement level (or simply the positioning requirement) to the base station 502 via a bitmap (e.g., in the signals 512, 514, 516). In some configurations, a bitmap of a positioning requirement level may be carried by PUCCH. In some other configurations, the bitmap may be conveyed as a group index in a scheduling request.

In an example in which the UEs 504, 506, and 510 have similar positioning requirements that may correspond to one level, e.g., level P₁, the signals (512, 514, 516) from the individual UEs may communicate the same bitmap (e.g., corresponding to a positioning requirement level Pₘ). In such an example, from the perspective of the base station 502, the UEs 504, 506, and 510 have similar positioning requirements and may be grouped together. In one aspect, based on the received bitmap indicating the positioning requirement level, the base station 502 may configure a NR-PRS *(e.g.* NR-PRS 400) for transmission to the group the UEs. That is, based on Pₘ, the base station 502 may dynamically configure the parameters (e.g., resources/numerology/waveform/precoding) of a NR-PRS to be transmitted for the group of UEs. In one aspect, for a given cell (e.g., corresponding to base station 502), various parameters of a NR-PRS may be dynamically configured based on the received positioning requirement (e.g., a positioning accuracy) and/or capabilities of NR-IoT devices (e.g., UEs 504, 506, 510) that request NR-PRS transmission for positioning. For example, in some configurations, parameters such as resources on which the NR-PRS will be transmitted, a numerology associated with the NR-PRS, a bandwidth associated with the NR-PRS, a precoding associated with the NR-PRS, a periodicity associated with the NR-PRS, a muting pattern, or a frequency hopping pattern may be adapted to accommodate different positioning accuracy requirements and capabilities of NR-IoT devices. The base station may determine multiple groups of UEs, each group having a different positioning requirement. Thus, the base station may configure parameters for an NR-PRS separately for each of the groups of UEs, each NR-PRS being configured based on the positioning requirement of the respective group of UEs.

Next, the base station 502 may transmit (e.g., multicast or broadcast) the configuration information (indicated as a broadcast/multicast signal 520) to the UEs, e.g., via PDSCH. For example, the configuration information of the NR-PRS (*e.g.* the NR-PRS parameters dynamically configured by the base station) may be part of the system information (e.g., in a SIB), carried by the PDSCH. In some configurations, a grant for the PDSCH carrying the configuration information may be transmitted to the UEs 504, 506, 510 via a group common PDCCH. In some other configurations, the configuration information of the NR-PRS may be signaled to the UEs via RRC signaling. The configuration may be signaled by the base station 502 (via PDSCH and PDCCH) or upper layer of the UE (via RRC signaling). The UEs 504, 506, 510 may receive the configuration information communicated in the signal 520 indicating the configured parameters for the NR-PRS common to the UEs. The received configuration information may be stored by the UEs 504, 506, 510.

Having communicated the configuration information to the UEs 504, 506, 510, the base station 502 may next transmit (e.g., broadcast or multicast in this example) the NR-PRS 522 having the parameters (*e.g.* bandwidth, periodicity, numerology, etc.) configured based on the positioning requirements and/or or the capability information of the UEs. In one configuration, the waveform of the received NR-PRS 522 (*e.g.* PRS 400, 425, or 450 in FIG. 4A) may comprise a CP-OFDM. In one configuration, the CP-OFDM waveform of the received NR-PRS 522 may comprise one of the following sequences: a discrete linear frequency modulation sequence with configurable slope and initial frequency, a multi-carrier phase coded CAZAC sequence, a concatenation of chirp sequences in time/frequency domain, or a frequency multiplexed sequence of complementary waveforms such as Golay sequences. In various configurations, a UE (e.g., UE 504) receiving the NR-PRS may perform (at 530) an operation based on the received NR-PRS. The operation may include at least one of a positioning operation, a ranging operation, or a velocity determination based on the received NR-PRS.

In one scenario where the UEs 504, 506, 510 in a region may have different positioning requirements (corresponding to different positioning requirement levels), the UEs may not be grouped together for PRS transmission purposes. In such a case, the base station 502 may determine whether it may be feasible to individually transmit different positioning reference signals (*e.g*. PRS 400, 425 and/or 450 individually configured for each different UE based on the positioning requirement and/or capability). In some such cases, the base station 502 may transmit different NR-PRS to the individual UEs when it may be feasible to do so. For example, when there is only a small number of individual UEs with different positioning requirements that require different positioning reference signals and the base station 502 has sufficient unused positioning signal resources (e.g., positioning subframes), the base station may be able to transmit NR-PRS individually to such small number of UEs.

FIG. 6 is a flowchart 600 of an example method of wireless communication in accordance with aspects presented herein. The method may be performed by a base station (e.g., base station 180, 310, 502, 1050, the apparatus 802, 802'). Optional aspects of the method are illustrated in dashed lines. The method improves the ability of a base station to facilitate high accuracy position determination by low powered devices in NR-compliant communication systems by allowing the base station to dynamically configure parameters associated with a PRS based on positioning requirements (*e.g*. a positioning requirement level) and/or capability information received from a UE and to transmit the configured PRS to the UE.

At 602, the base station may receive at least one of a positioning requirement or capability information of at least one device (*e.g.* a UE) that needs to perform a positioning operation. For example, referring to FIG. 5, the base station 502 may receive the signal 512 from the UE 504 communicating at least one of a positioning requirement (e.g., in the form of a bitmap of a positioning requirement level) or capability information of the UE 504. In accordance with one aspect, the positioning requirement may indicate at least one of a positioning accuracy, a ranging accuracy, and a velocity determination support requested by the UE 504. In one aspect, the capability information may indicate an operating bandwidth (e.g., 5MHz, 20MHz etc.) supported by the UE 504. In one aspect, the positioning requirement of the at least one device may indicate a positioning requirement level from among a set of positioning requirement levels as discussed above. In some configurations, the at least one device may be one of a plurality of devices (e.g., such as UEs 104, 504, 506, 510, 850, the apparatus 1002, 1002'). As discussed in more detail *supra* in connection with FIG. 5, in addition to the at least one device (e.g., UE 504) the base station 502 may also receive from various other devices (e.g., UEs 506, 510) device positioning requirements and/or capability information for various applications.

At 604, the base station may configure parameters associated with a PRS (e.g., an NR-PRS) based on at least one of the received positioning requirement or the capability information of the UE(s). In some configurations, the base station may group (e.g., logically) multiple devices having the same or similar positioning requirements and/or capabilities in order to configure a NR-PRS (e.g., by configuring various parameters of the NR-PRS that are suitable for the group of devices) for serving such multiple devices. In such a case, the base station may configure the NR-PRS parameters and generate a NR-PRS having the configured parameters to serve as a positioning reference signal for multiple devices. For example, referring to FIG. 5, based on the received positioning requirements, the base station 502 may configure a NR-PRS for transmission to the group the UEs. That is, based on P*ₘ*, the base station 502 may dynamically configure the parameters (e.g., resources/numerology/waveform/precoding) of a NR-PRS (e.g. NR-PRS 400, 425, and/or 450 as illustrated in FIG. 4A) to be transmitted for the group of UEs.

In one configuration, the base station may configure the parameters of the NR-PRS by configuring one or more of a waveform type of the NR-PRS, resources on which the NR-PRS will be transmitted, a numerology associated with the NR-PRS, a bandwidth associated with the NR-PRS, a precoding associated with the NR-PRS, or a periodicity associated with the NR-PRS. In one aspect, the base station may configure the parameters by selecting one or more of the parameters for the NR-PRS to accommodate the positioning requirement of the at least one device and/or based on the capability information (e.g., supported bandwidth/frequencies, power limitations and such factors) of the at least one device. In various configurations, the base station may configure/select the parameters of the NR-PRS by selecting a CP-OFDM waveform for the NR-PRS as illustrated at block 605 which shows operations that may be performed as part of configuring the parameters of the NR-PRS. In some such configurations, the base station may further select the parameters for the NR-PRS by selecting the configurations of and the sequences carried by the CP-OFDM waveform. In some configurations, the NR-PRS may have a CP-OFDM waveform that may carry one of the following sequences: discrete linear frequency modulation sequences with configurable slope and initial frequency, a multi-carrier phase coded CAZAC sequences, a concatenation of chirp sequences in at least one of time or frequency domain, or a frequency multiplexed sequence of complementary waveforms such as Golay sequences.

In some configurations, the at least one device (*e.g.* UE) comprises a narrow bandwidth (e.g., 5 MHz) NR-IoT device. In some such configurations, the base station may configure the parameters associated with the NR-PRS (block 604) by configuring a muting pattern for the NR-PRS to reduce inter-cell interference. In some other configurations, the at least one device comprises a wide bandwidth (e.g., ≥ 20MHz) NR-IoT device. In some such configurations, the base station may configure the parameters associated with the NR-PRS (block 604) by configuring a frequency hopping pattern for the NR-PRS. Thus, in some configurations, for wide band NR-IoT devices that support wider bandwidths, the base station may use a frequency hopping pattern to hop the PRS across different sub-bands.

In one configuration, the at least one device is one of a plurality of NR-IoT devices in a cell served by the base station. In one such configuration, at 606, the base station may transmit configuration information indicating the configured parameters for the NR-PRS common to the plurality of NR-IoT devices. For example, with reference to FIG. 5, the at least one device may be the UE 504 from among the plurality of UEs 504, 506, 510. Assuming the plurality of devices have the same or similar positioning requirements (e.g., corresponding to the same positioning requirement level) and/or capabilities, the same configuration information indicating the configured parameters for the NR-PRS may be applicable for the plurality of NR-IoT devices (thus the configuration information may be common to the plurality of devices). Thus, in the above example, the base station 502 may transmit (e.g., multicast or broadcast) configuration information (e.g., in signal 520) to the UEs 504, 506, 510. In some configurations, the configuration information for NR-PRS may be transmitted in a PDSCH, and a grant for the PDSCH may be transmitted via a group common PDCCH. While the configuration information for the NR-PRS may be transmitted by the base station in some configurations, in some other configurations, the configuration information may be preconfigured/stored within the at least one device.

At 608, the base station may transmit the NR-PRS having the configured parameters. For example, with reference to FIG. 5, the base station 502 may transmit the NR-PRS 522. The devices (e.g., one or more of the UEs 504, 506, 510) that earlier received configuration information regarding the NR-PRS may monitor for and receive the NR-PRS. The NR-PRS may be configured (for example, as PRS 400, 425, 450 in FIG. 4A or other PRS configurations) based on the position requirements/capability information received by the base station. As discussed *supra,* the devices may use the received NR-PRS for determining their own position, estimating position of other devices, velocity determination, and other applications.

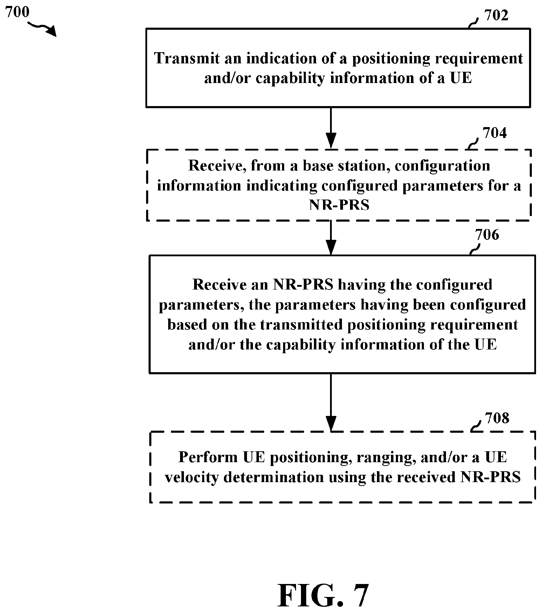

FIG. 7 is a flowchart 700 of an example method of wireless communication in accordance with aspects presented herein. The method may be performed by a UE (e.g., UE 104, 350, 504, 506, 510, 850, the apparatus 1002, 1002'). The UE implementing the method of flowchart 700 may be a NR-IoT device. Optional aspects of the method are illustrated in dashed lines. The method improves the ability of a UE to obtain on demand support for high accuracy position determination in NR-compliant communication systems by allowing the UE to transmit positioning requirements (*e.g.* a positioning requirement level) and/or capability information to a base station and to receive a dynamically configured PRS from the base station based on the positioning requirements/capability information.

At 702, the UE may transmit an indication of at least one of a positioning requirement or capability information of the UE to a base station, e.g., serving base station (e.g., base station 102, 180, 502, 1050, the apparatus 802, 802') of a cell in which the UE is located. For example, referring to FIG. 5, the UE may be the UE 504. The UE 504 may transmit a signal 512 indicating at least one of a positioning requirement or capability information of the UE 504 to the base station 502. In accordance with one aspect, the positioning requirement may include information indicating at least one of a positioning accuracy, a ranging accuracy, and a velocity determination support requested by the UE 504. In one aspect, the capability information may indicate an operating bandwidth (e.g., 5MHz, 20MHz etc.) supported by the UE 504. In one aspect, the positioning requirement of the at least one device may indicate a positioning requirement level from among a set of different quantized positioning requirement levels. For example, as discussed *supra,* the positioning requirements of different NR-IoT use cases may be classified into K different levels, for example P₁, P₂, ..., P_{K}, and each level may be characterized at least by parameters associated with ranging accuracy, velocity support and bandwidth. A signal (e.g., signal 512 from UE 504 in FIG. 5) communicating the positioning requirement of the UE may indicate one such level. Positioning requirement levels may be quantized, and one or more devices that may have similar positioning requirements and capabilities (e.g., bandwidth support) may be associated with the same positioning requirement level. The positioning requirement level may be conveyed to the base station by the UE via a bitmap. In some configurations, a bitmap of a positioning requirement level may be transmitted via PUCCH. In some other configurations, the bitmap may be conveyed as a group index in a scheduling request (SR).

At 704, the UE may receive, from the base station, configuration information indicating the configured parameters of a PRS (e.g., configured based on at least one the transmitted positioning requirement or capability information). The PRS may be a NR-PRS, e.g., a positioning reference signal designed to facilitate high accuracy positioning in NR systems. In some configurations, the UE may be one of a plurality of NR-IoT devices in a cell served by the base station. For example, with reference to FIG. 5, the UE may be the UE 504 from among the plurality of NR-IoT devices (e.g., UEs 504, 506, 510). In an aspect, the plurality of devices may have the same or similar positioning requirements (e.g., correspond to the same positioning requirement level). In some such configurations, at 704 the UE may receive configuration information indicating the configured parameters for the NR-PRS (*e.g.* waveform, numerology, precoding, etc.) common to the plurality of NR-IoT devices. For example, with reference to FIG. 5, the UE 504 may receive the configuration information signal 520 which may be broadcast/multicast by the base station 502 to multiple NR-IoT devices having the same or similar positioning requirements. In some configurations, the configuration information for NR-PRS may be received as part of the system information carried in a PDSCH. In some configurations, a grant for the PDSCH may be received by the UE via a group common PDCCH.

At 706, the UE may receive an NR-PRS having parameters configured based on at least one of the positioning requirement or the capability information of the UE. For example, with reference to FIG. 5, the UE 504 may receive the NR-PRS 522 transmitted by the base station, where the NR-PRS 522 may have parameters configured based on the positioning requirement and/or the capability information of the UE 504. In accordance with one aspect, the configured parameters of the NR-PRS are selected by the base station to accommodate the positioning requirement of the UE and/or that are well suited for the UE based on the capability information (e.g., supported bandwidth, power limitations etc.) of the UE. In some configurations, the configured parameters of the NR-PRS may include one or more of a waveform type of the NR-PRS, resources on which the NR-PRS will be transmitted, a numerology associated with the NR-PRS, a bandwidth associated with the NR-PRS, a precoding associated with the NR-PRS, or a periodicity associated with the NR-PRS. In some configurations, the configured parameters may further include a muting pattern, and a frequency hopping pattern of the NR-PRS. For example, referring to FIG. 4A, the NR-PRS may be PRS 400, 425, 450, or another PRS depending on the configured parameters.

In some configurations, the received NR-PRS may have a CP-OFDM waveform that may carry one of the following sequences: a discrete linear frequency modulation sequences with configurable slope and initial frequency, a multi-carrier phase coded CAZAC sequences, a concatenation of chirp sequences in at least one of time or frequency domain, or a frequency multiplexed sequence of complementary waveforms such as Golay sequences.

At 708, the UE may perform at least one of UE positioning, ranging, or a UE velocity determination based on the received NR-PRS. For example, with reference to FIG. 5, the UE 504 may receive the NR-PRS 522 and may use the received NR-PRS 522 for, e.g., determining UE position, estimating position of other devices, velocity determination, and/or other applications.

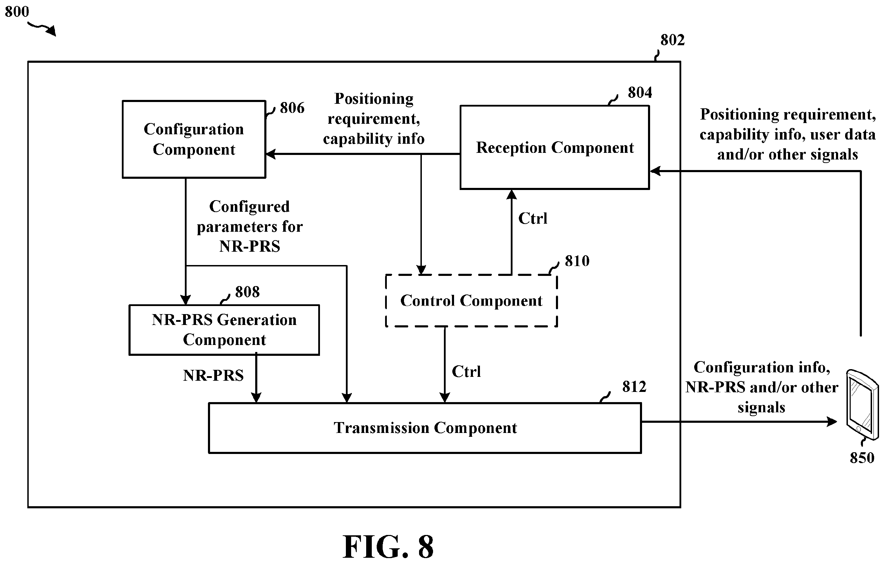

FIG. 8 is a conceptual data flow diagram 800 illustrating the data flow between different means/components in an example apparatus 802. The apparatus may be a base station (e.g., such as base station 180, 310, 502, 1050). For the purpose of discussion, we may consider that the apparatus 802 may correspond to the base station 502 shown in FIG. 5. The apparatus 802 may include a reception component 804, a configuration component 806, a NR-PRS generation component 808, a control component 810, and a transmission component 812.

The reception component 804 may be configured to receive and process messages and/or other information from other devices such as UE 850. The signals/information received by the reception component 804 may be provided to the configuration component 806, the control component 810 and/or other components of the apparatus 802 for further processing and use in performing various operations at the apparatus 802. In one configuration, the reception component 804 may receive at least one of a positioning requirement or capability information of at least one device (e.g., a NR-IoT type device such as UE 850) that needs to perform a positioning operation. As discussed *supra,* the positioning requirement may indicate at least one of a positioning accuracy, a ranging accuracy, and a velocity determination support for the at least one device. In one aspect, the positioning requirement of the at least one device may indicate a positioning requirement level from among a plurality of different possible positioning requirement levels. In one aspect, the capability information may indicate an operating bandwidth (e.g., 5MHz, 20MHz etc.) supported by the at least one device.

The configuration component 806 may configure parameters of a NR-PRS based on at least one of the positioning requirement or the capability information. In some configurations, as part of configuring the parameters, the configuration component 806 may configure one or more of a waveform type of the NR-PRS, resources on which the NR-PRS will be transmitted, a numerology associated with the NR-PRS, a bandwidth associated with the NR-PRS, a precoding associated with the NR-PRS, or a periodicity associated with the NR-PRS. In various configurations, the configuration component 806 may be configured to select the parameters of the NR-PRS based on at least one of the received positioning requirement or the capability information. In one aspect, the configuration component 806 may be configured to select a CP-OFDM waveform for the NR-PRS. In some configurations, as part of configuring the parameters, the configuration component 806 may be further configured to select the sequences carried by the CP-OFDM waveform. For example, in one configuration, the configuration component 806 may be configured to select a CP-OFDM waveform and one of the following sequences to be carried by the waveform: a discrete linear frequency modulation sequences with configurable slope and initial frequency, a multi-carrier phase coded CAZAC sequences, a concatenation of chirp sequences in at least one of time or frequency domain, or a frequency multiplexed sequence of complementary waveforms such as Golay sequences. In some configurations, the configuration component 806, when configuring the parameters associated with the NR-PRS, may further configure a muting pattern for the NR-PRS to reduce inter-cell interference. In some configurations, the configuration component 806, when configuring the parameters associated with the NR-PRS, may further configure a frequency hopping pattern for the NR-PRS. The configuration information indicating the configured parameters may be provided by the configuration component 806 to the NR-PRS generation component 808 and the transmission component 812 in some configurations.

The NR-PRS generation component 808 may be configured to generate a NR-PRS having the configured parameters in accordance with aspects described herein, e.g., configured/selected by the configuration component 806 as discussed above. The NR-PRS generated by the NR-PRS generation component 808 may be provided to the transmission component 812 for transmission.

The transmission component 812 may be configured to transmit signals to at least one external device, e.g., UE 850, and other UEs. For example, the transmission component 812 may be configured to transmit the configuration information indicating the configured parameters for the NR-PRS. In some configurations, the at least one device is one of a plurality of NR-IoT devices in a cell served by the apparatus 802, and the plurality of NR-IoT devices may have the same or similar positioning requirements. In such configurations, the transmission component 812 may transmit the configuration information indicating the configured parameters for the NR-PRS common to the plurality of NR-IoT devices. In some configurations, the transmission component 812 may be configured to transmit the configuration information for NR-PRS in a PDSCH, and be configured to transmit a grant for the PDSCH via a group common PDCCH. In various configurations, the transmission component 812 may be further configured to transmit the NR-PRS having the configured parameters. In some configurations, the transmission of the NR-PRS may be a broadcast or multicast to a plurality of devices including the at least one device (e.g., UE 850).

The control component 810 may be configured to control the transmission schedule and/or transmission timing of one or more signals transmitted by the transmission component 812. In some configurations, the control component 810 may be implemented within the transmission component 812. In some configurations, the control component 810 may be configured to control the operation of the apparatus 802 in accordance with the methods (e.g., method of flowchart 600) described herein, and accordingly control one or more components of the apparatus 802 to operate in accordance with the methods described herein.

The apparatus may include additional components that perform each of the blocks of the algorithm in the aforementioned flowchart of FIG. 6. As such, each block in the aforementioned flowchart of FIG. 6 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

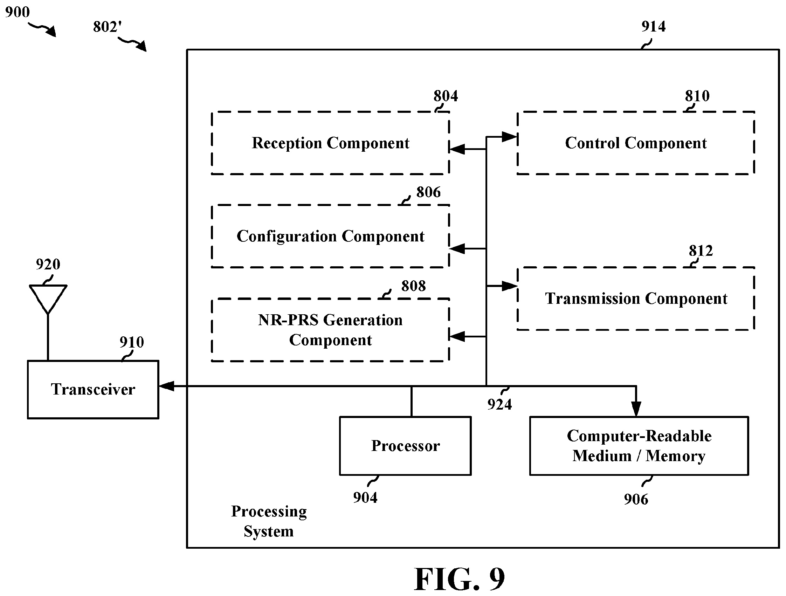

FIG. 9 is a diagram 900 illustrating an example of a hardware implementation for an apparatus 802' employing a processing system 914. The processing system 914 may be implemented with a bus architecture, represented generally by the bus 924. The bus 924 may include any number of interconnecting buses and bridges depending on the specific application of the processing system 914 and the overall design constraints. The bus 924 links together various circuits including one or more processors and/or hardware components, represented by the processor 904, the components 804, 806, 808, 810, 812 and the computer-readable medium/memory 906. The bus 924 may also link various other circuits such as timing sources, peripherals, voltage regulators, and power management circuits, which are well known in the art, and therefore, will not be described any further.

The processing system 914 may be coupled to a transceiver 910. The transceiver 910 is coupled to one or more antennas 920. The transceiver 910 provides a means for communicating with various other apparatus over a transmission medium. The transceiver 910 receives a signal from the one or more antennas 920, extracts information from the received signal, and provides the extracted information to the processing system 914, specifically the reception component 804. In addition, the transceiver 910 receives information from the processing system 914, specifically the transmission component 812, and based on the received information, generates a signal to be applied to the one or more antennas 920. The processing system 914 includes a processor 904 coupled to a computer-readable medium/memory 906. The processor 904 is responsible for general processing, including the execution of software stored on the computer-readable medium/memory 906. The software, when executed by the processor 904, causes the processing system 914 to perform the various functions described *supra* for any particular apparatus. The computer-readable medium/memory 906 may also be used for storing data that is manipulated by the processor 904 when executing software. The processing system 914 further includes at least one of the components 804, 806, 808, 810, 812. The components may be software components running in the processor 904, resident/stored in the computer readable medium/memory 906, one or more hardware components coupled to the processor 904, or some combination thereof. The processing system 914 may be a component of the base station 310 and may include the memory 376 and/or at least one of the TX processor 316, the RX processor 370, and the controller/processor 375.

In one configuration, the apparatus 802/802' for wireless communication includes means for receiving at least one of a positioning requirement or capability information of at least one device that needs to perform a positioning operation. In some configurations, the apparatus further comprises means for configuring parameters associated with a NR-PRS based on at least one of the positioning requirement or the capability information, wherein configuring the parameters includes configuring one or more of a waveform type of the NR-PRS, resources on which the NR-PRS will be transmitted, numerology associated with the NR-PRS, bandwidth associated with the NR-PRS, precoding associated with the NR-PRS, or periodicity associated with the NR-PRS. In some configurations, the apparatus further comprises means for transmitting the NR-PRS having the configured parameters.

In some configurations, the means for configuring the parameters is configured to select the parameters for the NR-PRS based on the positioning requirement and capability information of the at least one device. In some configurations, the waveform of the NR-PRS comprises a CP-OFDM waveform, and the means for configuring the parameters is further configured to select the configurations of and the sequences carried by the CP-OFDM waveform. In one configuration, the at least one device comprises a narrow bandwidth NR-IoT device, and the means for configuring the parameters associated with the NR-PRS further configures a muting pattern for the NR-PRS to reduce inter-cell interference. In one configuration, the at least one device comprises a wide bandwidth NR-IoT device, and the means for configuring the parameters associated with the NR-PRS further configures a frequency hopping pattern for the NR-PRS.

In some configurations, the means for transmitting is further configured to transmit configuration information indicating the configured parameters for the NR-PRS common to a plurality of NR-IoT devices including the at least one device. In one configuration, the configuration information for NR-PRS is transmitted by the means for transmitting in a PDSCH, and a grant for the PDSCH is transmitted via a group common PDCCH.

The aforementioned means may be one or more of the aforementioned components of the apparatus 802 and/or the processing system 914 of the apparatus 802' configured to perform the functions recited by the aforementioned means. As described *supra,* the processing system 914 may include the TX Processor 316, the RX Processor 370, and the controller/processor 375. As such, in one configuration, the aforementioned means may be the TX Processor 316, the RX Processor 370, and the controller/processor 375 configured to perform the functions recited by the aforementioned means.

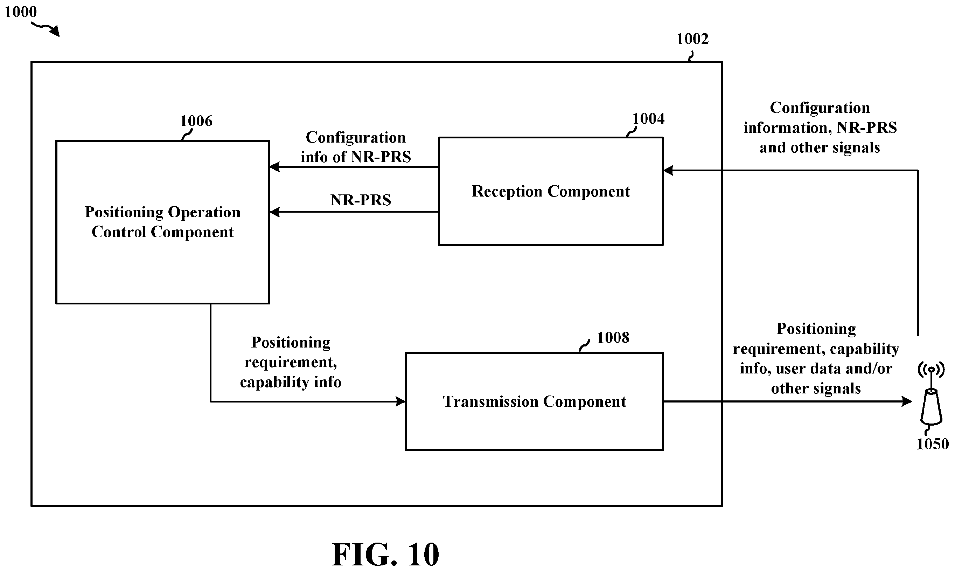

FIG. 10 is a conceptual data flow diagram 1000 illustrating the data flow between different means/components in an exemplary apparatus 1002. The apparatus may be a UE (e.g., such as UE 104, 350, 504, 506, 510, 850). The apparatus includes a reception component 1004, a positioning operation control component 1006, and a transmission component 108.

The reception component 1004 may be configured to receive control information (e.g., configuration information of a NR-PRS), data, and/or other information from other devices including, e.g., base station 1050. The signals/information may be received by the reception component 1004 in accordance with the methods discussed *supra* including the method of flowchart 700. The received signals/information may be provided to one or more components of the apparatus 1002 for further processing and use in performing various operations in accordance with the methods described herein.

The transmission component 1008 may be configured to transmit data, control information and/or other signaling to one or more external devices including, e.g., base station 1050. For example, in some configurations, the transmission component 1008 may be configured to transmit an indication of at least one of a positioning requirement or capability information of the apparatus 1002 to the base station 1050. As discussed *supra* in detail in connection with FIGs. 5-7, the positioning requirement may indicate at least one of a positioning accuracy, a ranging accuracy, and a velocity determination support requested by the apparatus. The capability information may indicate an operating bandwidth supported by the UE. In some configurations, the positioning requirement may indicate a positioning requirement level from among a set of different positioning requirement levels, wherein each positioning requirement level in the set may indicate parameters associated with at least one of a ranging accuracy, velocity determination support, and a bandwidth. In some configurations, the positioning requirement level is quantized and indicated via a bitmap, and the transmission component 1008 is configured to transmit the bitmap in a PUCCH or communicate the bitmap as a group index in a scheduling request. Thus, in some configurations, the positioning requirement and/or capability information of the apparatus may be indicated through such a bitmap. In some such configurations, the transmission component 1008 may transmit the bitmap communicating the positioning requirement level corresponding to the apparatus 1002.

In one configuration, the reception component 1004 may be configured to receive, from the base station 1050, configuration information indicating configured parameters for a NR-PRS, the parameters having been configured based on at least one of the transmitted positioning requirement or the capability information of the apparatus 1002. In some configurations, the apparatus 1002 is one of a plurality of NR-IoT devices, e.g., in a cell served by the base station 1050, and the plurality of NR-IoT devices may have the same or similar positioning requirements. In one such configuration, the reception component 1004 may be configured to receive the configuration information indicating the configured parameters for the NR-PRS common to the plurality of NR-IoT devices. In some configurations, the reception component 1004 may receive the configuration information for NR-PRS in the system information carried in a PDSCH, and may receive a grant for the PDSCH via a group common PDCCH. The received configuration information may be provided to the positioning operation control component 1006 for use in controlling various operations of the apparatus 1002 in accordance with the methods described herein. The received configuration information (e.g., one or more parameters) may also be used by reception component 1004 to monitor for, receive and decode the NR-PRS from the base station 1050.

In various configurations, the reception component 1004 may be further configured to receive the NR-PRS having the parameters configured based on at least one of the transmitted positioning requirement or the capability information of the apparatus 1002. The configured parameters may include one or more of a waveform type of the NR-PRS, resources on which the NR-PRS will be transmitted, a numerology associated with the NR-PRS, a bandwidth associated with the NR-PRS, a precoding associated with the NR-PRS, or a periodicity associated with the NR-PRS. In some configurations, the NR-PRS may be received in a broadcast or multicast from the base station 1050. In one configuration, the waveform of the received NR-PRS comprises a CP-OFDM waveform. In some such configurations, the CP-OFDM waveform of the received NR-PRS comprises one of the following sequences: a discrete linear frequency modulation sequences with configurable slope and initial frequency, a multi-carrier phase coded CAZAC sequences, a concatenation of chirp sequences in at least one of time or frequency domain, or a frequency multiplexed sequence of complementary waveforms such as Golay sequences. In some configurations, the parameters associated with the NR-PRS may further comprise a muting pattern for the NR-PRS. In some configurations, the parameters associated with the NR-PRS may further comprise a frequency hopping pattern for the NR-PRS.

The positioning operation control component 1006 may be configured to control positioning determination and related operations in accordance with the methods and techniques described herein. For example, the positioning operation control component 1006 may be configured to perform at least one of a positioning operation, a ranging operation, or a velocity determination, using the received NR-PRS. The positioning operation control component 1006 may be further configured to control the transmission/reception of one or more positioning related signals at the apparatus 1002. In some configurations, the positioning operation control component 1006 may be configured to control the operation of the apparatus 1002 in accordance with the methods (e.g., method of flowchart 700) described herein, and accordingly control one or more components of the apparatus 1002 to operate in accordance with the methods described herein.

The apparatus may include additional components that perform each of the blocks of the algorithm in the aforementioned flowchart of FIG. 7. As such, each block in the aforementioned flowchart of FIG. 7 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

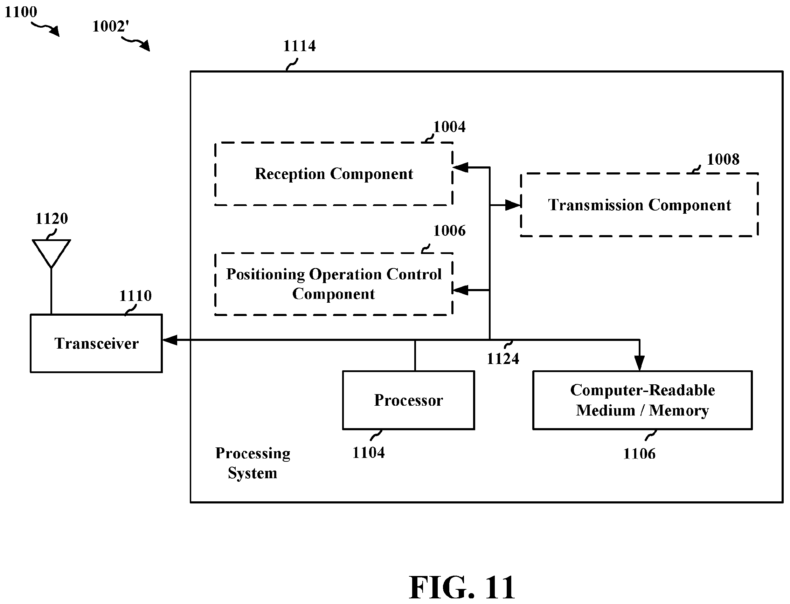

FIG. 11 is a diagram 1100 illustrating an example of a hardware implementation for an apparatus 1002' employing a processing system 1114. The processing system 1114 may be implemented with a bus architecture, represented generally by the bus 1124. The bus 1124 may include any number of interconnecting buses and bridges depending on the specific application of the processing system 1114 and the overall design constraints. The bus 1124 links together various circuits including one or more processors and/or hardware components, represented by the processor 1104, the components 1004, 1006, 1008, and the computer-readable medium/memory 1106. The bus 1124 may also link various other circuits such as timing sources, peripherals, voltage regulators, and power management circuits, which are well known in the art, and therefore, will not be described any further.

The processing system 1114 may be coupled to a transceiver 1110. The transceiver 1110 is coupled to one or more antennas 1120. The transceiver 1110 provides a means for communicating with various other apparatus over a transmission medium. The transceiver 1110 receives a signal from the one or more antennas 1120, extracts information from the received signal, and provides the extracted information to the processing system 1114, specifically the reception component 1004. In addition, the transceiver 1110 receives information from the processing system 1114, specifically the transmission component 1008, and based on the received information, generates a signal to be applied to the one or more antennas 1120. The processing system 1114 includes a processor 1104 coupled to a computer-readable medium/memory 1106. The processor 1104 is responsible for general processing, including the execution of software stored on the computer-readable medium/memory 1106. The software, when executed by the processor 1104, causes the processing system 1114 to perform the various functions described *supra* for any particular apparatus. The computer-readable medium / memory 1106 may also be used for storing data that is manipulated by the processor 1104 when executing software. The processing system 1114 further includes at least one of the components 1004, 1006, 1008. The components may be software components running in the processor 1104, resident/stored in the computer readable medium/memory 1106, one or more hardware components coupled to the processor 1104, or some combination thereof. The processing system 1114 may be a component of the UE 350 and may include the memory 360 and/or at least one of the TX processor 368, the RX processor 356, and the controller/processor 359.

In one configuration, the apparatus 1002/1002' for wireless communication is a UE comprising means for transmitting an indication of at least one of a positioning requirement or capability information of the UE, e.g., to a base station. The apparatus 1002/1002' may further comprise means for receiving a NR-PRS having parameters configured based on at least one of the positioning requirement or the capability information of the UE, the configured parameters including one or more of a waveform type of the NR-PRS, resources on which the NR-PRS will be transmitted, numerology associated with the NR-PRS, bandwidth associated with the NR-PRS, precoding associated with the NR-PRS, or periodicity associated with the NR-PRS. In some configurations, the positioning requirement may indicate a positioning requirement level from among a set of different positioning requirement levels, wherein each positioning requirement level in the set may indicate parameters associated with at least one of a ranging accuracy, velocity determination support, and a bandwidth. In some configurations, the positioning requirement level is quantized and indicated via a bitmap, where the bitmap is transmitted in a PUCCH or communicated as a group index in a scheduling request. Thus, in some configurations, the positioning requirement and/or capability information of the UE (apparatus 1002) may be indicated through such a bitmap. In some such configurations, the means for transmitting may be configured to transmit, e.g., to the base station, the bitmap communicating the positioning requirement level corresponding to the apparatus 1002.

In some configurations, the means for receiving may be further configured to receive, from a base station, configuration information indicating configured parameters for the NR-PRS, the parameters having been configured by the base station based on at least one of the transmitted positioning requirement or the capability information of the UE. In some configurations, the UE (apparatus 1002) is one of a plurality of NR-IoT devices, e.g., in a cell served by the base station, and the plurality of NR-IoT devices may have same or similar positioning requirements. In one such configuration, the means for receiving may be configured to receive configuration information indicating the configured parameters for the NR-PRS common to the plurality of NR-IoT devices. In some configurations, the configuration information for NR-PRS may be received in the system information carried in a PDSCH, and a grant for the PDSCH may be received via a group common PDCCH.

In one configuration, the apparatus 1002/1002' may further comprise means for performing at least one of UE positioning, ranging, or a UE velocity determination using the received NR-PRS.

The aforementioned means may be one or more of the aforementioned components of the apparatus 1002 and/or the processing system 1114 of the apparatus 1002' configured to perform the functions recited by the aforementioned means. As described *supra,* the processing system 1114 may include the TX Processor 368, the RX Processor 356, and the controller/processor 359. As such, in one configuration, the aforementioned means may be the TX Processor 368, the RX Processor 356, and the controller/processor 359 configured to perform the functions recited by the aforementioned means.

Accordingly, the present disclosure facilitates high accuracy position determination by low powered devices (*e.g*. UEs) in NR-compliant communication systems by allowing a base station to dynamically configure parameters associated with a PRS based on position requirements and/or capability information received from a UE and to transmit the configured PRS to the UE or group of UEs. The present disclosure also provides for on demand support for high accuracy position determination in NR-compliant communication systems by allowing UEs to transmit positioning requirements (*e.g*. a positioning requirement level) and/or capability information to a base station when the UE requires positioning operation support.

It is understood that the specific order or hierarchy of blocks in the processes/flowcharts disclosed is an illustration of exemplary approaches. Based upon design preferences, it is understood that the specific order or hierarchy of blocks in the processes/flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. The words "module," "mechanism," "element," "device," and the like may not be a substitute for the word "means." As such, no claim element is to be construed as a means plus function unless the element is expressly recited using the phrase "means for."

## Claims

1. A method of wireless communication performed by a user equipment, UE (504, 506, 510) in a New Radio based communication system comprising:
transmitting (702) a request for positioning assistance from the UE (504, 506, 510) to a base station (502), the request comprising an indication of capability information of the UE (504) and a positioning requirement that indicates a positioning requirement level from amongst a set of different positioning requirement levels, wherein each positioning requirement level in the set of different positioning requirement levels indicates corresponding parameters associated with at least one of a ranging accuracy, velocity determination support, and a bandwidth; and
receiving (704) from the base station in response to the request a New Radio, positioning reference signal, NR-PRS having parameters dynamically configured based on at least one of the positioning requirement or the capability information of the UE included in the positioning request, wherein the parameters include one or more of a waveform type of the NR-PRS, resources on which the NR-PRS will be transmitted, numerology associated with the NR-PRS, bandwidth associated with the NR-PRS, precoding associated with the NR-PRS, or periodicity associated with the NR-PRS.

2. The method of claim 1, wherein the positioning requirement level is quantized and indicated via a bitmap, wherein the bitmap is transmitted in a physical uplink control channel PUCCH or communicated as a group index in a scheduling request.

3. The method of claim 1, wherein the capability information indicates an operating bandwidth supported by the UE (504, 506, 510).

4. The method of claim 1, further comprising:
performing at least one of UE positioning, ranging, or a UE velocity determination using the NR-PRS received by the UE (504, 506, 510).

5. The method of claim 1, wherein the waveform type of the NR-PRS received by the UE comprises a Cyclic-Prefix Orthogonal Frequency Division Multiplexing, CP-OFDM waveform.

6. The method of claim 5, wherein the CP-OFDM waveform of the NR-PRS received by the UE comprises one of:
a discrete linear frequency modulation sequence having a configurable slope and initial frequency,
a multi-carrier phase coded constant amplitude zero autocorrelation, CAZAC, sequence,
a concatenation of chirp sequences in at least one of a time domain and a frequency domain,
a frequency multiplexed sequence of complementary waveforms, or
a pair of complementary Golay sequences.

7. The method of claim 1, wherein the UE (504, 506, 510) is one of a plurality of internet of things devices in a cell served by a base station, the method further comprising:
receiving, from the base station, configuration information indicating the parameters for the NR-PRS common to the plurality of internet of things devices.

8. The method of claim 7,
wherein the configuration information is received via radio resource control, RRC signaling, or a physical downlink shared channel, PDSCH, and a grant for the PDSCH carrying the configuration information is received in a group common physical downlink control channel, PDCCH.

9. A user equipment, UE, (504, 506, 510) for wireless communication in a New Radio-compliant communication system, comprising:
a memory; and
at least one processor coupled to the memory and configured to:
transmit an indication of at least one of a positioning requirement or capability information of the UE the request comprising an indication of a capability information of the UE (504) and a positioning requirement that indicates a positioning requirement level from amongst a set of different positioning requirement levels, wherein each positioning requirement level in the set of different positioning requirement levels indicates corresponding parameters associated with at least one of a ranging accuracy, velocity determination support, and a bandwidth; and
receive from the base station in response to the request a New Radio positioning reference signal, NR-PRS, having parameters dynamically configured based on at least one of the positioning requirement or the capability information of the UE included in the positioning request, wherein the parameters include one or more of a waveform type of the NR-PRS, resources on which the NR-PRS will be transmitted, numerology associated with the NR-PRS, bandwidth associated with the NR-PRS, precoding associated with the NR-PRS, or periodicity associated with the NR-PRS.

10. A method of wireless communication performed by a base station in a New Radio based communication system, comprising:
receiving (602) from a user equipment, UE, (504, 506, 510) at the base station (502) a request for positioning assistance the request comprising an indication of a capability information of the UE (504) and a positioning requirement that indicates a positioning requirement level from amongst a set of different positioning requirement levels, wherein each positioning requirement level in the set of different positioning requirement levels indicates corresponding parameters associated with at least one of a ranging accuracy, velocity determination support, and a bandwidth;;
dynamically configuring at the base station (604) parameters associated with a positioning reference signal, NR-PRS based on at least one of the positioning requirement or the capability information, wherein configuring the parameters includes configuring one or more of a waveform type of the NR-PRS, resources on which the NR-PRS will be transmitted, numerology associated with the NR-PRS, bandwidth associated with the NR-PRS, precoding associated with the NR-PRS, or periodicity associated with the NR-PRS; and
transmitting from the base station the NR-PRS having the configured parameters to the UE (504, 506, 510).

11. The method of claim 10, wherein the UE (504, 506, 510) comprises a narrow bandwidth internet of things, IoT device, and wherein configuring the parameters associated with the NR-PRS further comprises configuring a muting pattern for the NR-PRS to reduce inter-cell interference orwherein the UE comprises a wide bandwidth internet of things, IoT device, and wherein configuring the parameters associated with the NR-PRS further comprises configuring a frequency hopping pattern for the NR-PRS.

12. A base station for wireless communication in a New Radio-compliant communication system, comprising:
a memory; and
at least one processor coupled to the memory and configured to:
receive (602) from a user equipment, UE, (504, 506, 510) at the base station (502) a request for positioning assistance, the request comprising an indication of a capability information of the UE (504) and a positioning requirement that indicates a positioning requirement level from amongst a set of different positioning requirement levels, wherein each positioning requirement level in the set of different positioning requirement levels indicates corresponding parameters associated with at least one of a ranging accuracy, velocity determination support, and a bandwidth
dynamically configure parameters associated with a positioning reference signal, NR-PRS, based on at least one of the positioning requirement or the capability information, wherein configuring the parameters includes configuring one or more of a waveform type of the NR-PRS, resources on which the NR-PRS will be transmitted, numerology associated with the NR-PRS, bandwidth associated with the NR-PRS, precoding associated with the NR-PRS, or periodicity associated with the NR-PRS; and
transmit the NR-PRS having the configured parameter to the UE (504).

## Patentansprüche

1. Ein Verfahren zur drahtlosen Kommunikation, das von einer Benutzereinrichtung bzw. UE (UE = user equipment) (504, 506, 510) in einem New-Radio-basierenden Kommunikationssystem durchgeführt wird, das Folgendes aufweist:
Senden (702) einer Anfrage zur Positionierungsunterstützung von der UE (504, 506, 510) an eine Basisstation (502), wobei die Anfrage eine Angabe von Fähigkeitsinformation der UE (504) und eine Positionierungsanforderung aufweist, die eine Positionierungsanforderungsstufe aus einem Satz verschiedener Positionierungsanforderungsstufen angibt, wobei jede Positionierungsanforderungsstufe in dem Satz der verschiedenen Positionierungsanforderungsstufen entsprechende Parameter angibt, die mit zumindest einem aus einer Entfernungsgenauigkeit, Geschwindigkeitsbestimmungsunterstützung und Bandbreite assoziiert sind, und
Empfangen (704) von der Basisstation in Reaktion auf die Anfrage eines New-Radio-Positionierungsreferenzsignals bzw. NR-PRS (NR-PRS = New Radio positioning reference signal) mit Parametern, die dynamisch konfiguriert sind basierend auf zumindest einer der Positionierungsanforderung oder der Fähigkeitsinformation der UE, die in der Positionierungsanforderung enthalten sind, wobei die Parameter eines oder mehrere aufweisen aus einem Wellenformtyp des NR-PRS, Ressourcen, auf denen das NR-PRS übertragen wird, Numerologie, die mit dem NR-PRS assoziiert ist, Bandbreite, die mit dem NR-PRS assoziiert ist, Vorcodierung, die mit dem NR-PRS assoziiert ist oder Periodizität, die mit dem NR-PRS assoziiert ist.

2. Das Verfahren gemäß Anspruch 1, wobei die Positionierungsanforderungsstufe quantisiert und über eine Bitmap angegeben wird, wobei die Bitmap in einem PUCCH (PUCCH = physical uplink control channel) übertragen wird oder als Gruppenindex in einer Planungsanfrage kommuniziert wird.

3. Das Verfahren gemäß Anspruch 1, wobei die Fähigkeitsinformation eine von der UE (504, 506, 510) unterstützte Betriebsbandbreite angibt.

4. Das Verfahren gemäß Anspruch 1, das weiter aufweist:
Durchführen zumindest eines aus einer UE-Positionierung, Entfernungsmessung oder einer UE-Geschwindigkeitsbestimmung unter Verwendung des von der UE (504, 506, 510) empfangenen NR-PRS.

5. Das Verfahren gemäß Anspruch 1, wobei der Wellenformtyp des von der UE empfangenen NR-PRS eine CP-OFDM(CP-OFDM = Cyclic-Prefix Orthogonal Frequency Division Multiplexing)-Wellenform aufweist.

6. Das Verfahren gemäß Anspruch 5,
wobei die CP-OFDM-Wellenform des von der UE empfangenen NR-PRS eines aufweist aus:
eine diskrete lineare Frequenzmodulationssequenz mit konfigurierbarer Steigung und Anfangsfrequenz,
eine mehrträgerphasencodierte Konstantamplitude-Null-Autokorrelations- bzw. CAZAC(constant amplitude zero autocorrelation)-Sequenz,
eine Verkettung von Chirp-Sequenzen in zumindest einem eines Zeitbereichs und eines Frequenzbereichs,
eine Frequenzmultiplexsequenz von komplementären Wellenformen, oder
ein Paar von komplementären Golay-Sequenzen.

7. Das Verfahren gemäß Anspruch 1, wobei die UE (504, 506, 510) eine aus einer Vielzahl von Internet-der-Dinge- bzw. Internet-of-Things-Vorrichtungen in einer von einer Basisstation bedienten Zelle ist, wobei das Verfahren weiter aufweist:
Empfangen, von der Basisstation, von Konfigurationsinformation, die die Parameter für das NR-PRS angibt, die für die Vielzahl von Internet-der-Dinge-Vorrichtungen gemeinsam sind.

8. Das Verfahren gemäß Anspruch 7,
wobei die Konfigurationsinformation über eine Funkressourcensteuerungs- bzw. RRC(RRC = radio resource control)-Signalisierung oder einen PDSCH (PDSCH = physical downlink shared channel) empfangen wird und eine Erteilung für den PDSCH, der die Konfigurationsinformation aufweist, in einem gruppengemeinsamen PDCCH (physical downlink control channel) empfangen wird.

9. Eine Benutzereinrichtung bzw. UE (504, 506, 510) zur drahtlosen Kommunikation in einem New-Radio-kompatiblen Kommunikationssystem, die Folgendes aufweist:
einen Speicher; und
zumindest einen Prozessor, der mit dem Speicher gekoppelt ist und konfiguriert ist zum:
Senden einer Angabe zumindest eines aus einer Positionierungsanforderung oder einer Fähigkeitsinformation der UE, wobei die Anfrage eine Angabe von Fähigkeitsinformation der UE (504) und eine Positionierungsanforderung aufweist, die eine Positionierungsanforderungsstufe aus einem Satz verschiedener Positionierungsanforderungsstufen angibt, wobei jede Positionierungsanforderungsstufe in dem Satz der verschiedenen Positionierungsanforderungsstufen entsprechende Parameter angibt, die mit zumindest einem aus einer Entfernungsgenauigkeit, Geschwindigkeitsbestimmungsunterstützung und Bandbreite assoziiert sind; und
Empfangen, von der Basisstation in Reaktion auf die Anfrage, eines New-Radio-Positionierungsreferenzsignals bzw. NR-PRS mit Parametern, die dynamisch konfiguriert sind basierend auf zumindest einer der Positionierungsanforderung oder der Fähigkeitsinformation der UE, die in der Positionierungsanforderung enthalten sind, wobei die Parameter eines oder mehrere aufweisen aus einem Wellenformtyp des NR-PRS, Ressourcen, auf denen das NR-PRS übertragen wird, Numerologie, die mit dem NR-PRS assoziiert ist, Bandbreite, die mit dem NR-PRS assoziiert ist, Vorcodierung, die mit dem NR-PRS assoziiert ist oder Periodizität, die mit dem NR-PRS assoziiert ist.

10. Ein Verfahren zur drahtlosen Kommunikation, das von einer Basisstation in einem New-Radio-basierenden Kommunikationssystem durchgeführt wird, das Folgendes aufweist:
Empfangen (602), von einer UE (504, 506, 510) an der Basisstation (502), einer Anfrage zur Positionierungsunterstützung, wobei die Anfrage eine Angabe von Fähigkeitsinformation der UE (504) und eine Positionierungsanforderung aufweist, die eine Positionierungsanforderungsstufe aus einem Satz verschiedener Positionierungsanforderungsstufen angibt, wobei jede Positionierungsanforderungsstufe in dem Satz der verschiedenen Positionierungsanforderungsstufen entsprechende Parameter angibt, die mit zumindest einem aus einer Entfernungsgenauigkeit, Geschwindigkeitsbestimmungsunterstützung und Bandbreite assoziiert sind;
dynamisches Konfigurieren an der Basisstation (604) von Parametern, die mit einem Positionierungsreferenzsignal bzw. NR-PRS assoziiert sind, basierend auf zumindest einer der Positionierungsanforderung oder der Fähigkeitsinformation, wobei das Konfigurieren der Parameter ein Konfigurieren eines oder mehrere aus einem Wellenformtyp des NR-PRS, Ressourcen, auf denen das NR-PRS übertragen wird, Numerologie, die mit dem NR-PRS assoziiert ist, Bandbreite, die mit dem NR-PRS assoziiert ist, Vorcodierung, die mit dem NR-PRS assoziiert ist oder Periodizität, die mit dem NR-PRS assoziiert ist, aufweist; und
Senden von der Basisstation des NR-PRS mit den konfigurierten Parametern an die UE (504, 506, 510).

11. Das Verfahren gemäß Anspruch 10,
wobei die UE (504, 506, 510) eine Schmalband-Internet-der-Dinge- bzw. - IoT(IoT = internet of things) -Vorrichtung aufweist und wobei das Konfigurieren der mit dem NR-PRS assoziierten Parameter weiter ein Konfigurieren eines Stummschaltemusters für das NR-PRS aufweist, um eine Interzelleninterferenz zu reduzieren, oder wobei die UE eine Breitband-Internet-der-Dinge- bzw. -IoT-Vorrichtung aufweist und wobei das Konfigurieren der mit dem NR-PRS assoziierten Parameter weiter ein Konfigurieren eines Frequenzsprungmusters für das NR-PRS aufweist.

12. Eine Basisstation zur drahtlosen Kommunikation in einem New-Radiokompatiblen Kommunikationssystem, die Folgendes aufweist:
einen Speicher; und
zumindest einen Prozessor, der mit dem Speicher gekoppelt ist und konfiguriert ist zum:
Empfangen (602) von einer Benutzereinrichtung bzw. UE (504, 506, 510) an der Basisstation (502) einer Anfrage zur Positionierungsunterstützung, wobei die Anfrage eine Angabe von Fähigkeitsinformation der UE (504) und eine Positionierungsanforderung aufweist, die eine Positionierungsanforderungsstufe aus einem Satz verschiedener Positionierungsanforderungsstufen angibt, wobei jede Positionierungsanforderungsstufe in dem Satz der verschiedenen Positionierungsanforderungsstufen entsprechende Parameter angibt, die mit zumindest einem aus einer Entfernungsgenauigkeit, Geschwindigkeitsbestimmungsunterstützung und Bandbreite assoziiert sind;
dynamischen Konfigurieren von Parametern, die mit einem Positionierungsreferenzsignal bzw. NR-PRS assoziiert sind, basierend auf zumindest einer der Positionierungsanforderung oder der Fähigkeitsinformation, wobei das Konfigurieren der Parameter ein Konfigurieren eines oder mehrere aus einem Wellenformtyp des NR-PRS, Ressourcen, auf denen das NR-PRS übertragen wird, Numerologie, die mit dem NR-PRS assoziiert ist, Bandbreite, die mit dem NR-PRS assoziiert ist, Vorcodierung, die mit dem NR-PRS assoziiert ist oder Periodizität, die mit dem NR-PRS assoziiert ist, aufweist; und
Senden des NR-PRS mit dem konfigurierten Parameter an die UE (504).

## Revendications

1. Procédé de communication sans fil effectué par un équipement utilisateur, UE (504, 506, 510) dans un système de communication de type New Radio, comprenant :
la transmission (702) d'une demande d'assistance au positionnement de l'UE (504, 506, 510) à une station de base (502), la demande comprenant une indication d'informations de capacité de l'UE (504) et une exigence de positionnement qui indique un niveau d'exigence de positionnement parmi un ensemble de différents niveaux d'exigence de positionnement, dans lequel chaque niveau d'exigence de positionnement dans le ensemble de différents niveaux d'exigence de positionnement indique des paramètres correspondants associés à au moins l'un parmi une précision de télémétrie, un support de détermination de vitesse et une largeur de bande ; et
la réception (704) depuis la station de base en réponse à la demande d'un signal de référence de positionnement New Radio, NR-PRS ayant des paramètres configurés dynamiquement sur la base d'au moins une parmi des exigences de positionnement ou des informations de capacité de l'UE incluses dans la demande de positionnement, les paramètres comprenant un ou plusieurs parmi un type de forme d'onde du NR-PRS, des ressources sur lesquelles le NR-PRS sera transmis, une numérologie associée au NR-PRS, une largeur de bande associée au NR-PRS, un précodage associé au NR-PRS, ou une périodicité associée au NR-PRS.

2. Procédé selon la revendication 1, dans lequel le niveau d'exigence de positionnement est quantifié et indiqué par l'intermédiaire d'une carte bitmap, dans lequel la carte bitmap est transmise dans un canal de commande de liaison montante physique PUCCH ou communiquée en tant qu'indice de groupe dans une demande de planification.

3. Procédé selon la revendication 1, dans lequel les informations de capacité indiquent une largeur de bande de fonctionnement prise en charge par l'UE (504, 506, 510).

4. Procédé selon la revendication 1, comprenant en outre :
la réalisation d'au moins l'une parmi la localisation de l'UE, la télémétrie ou la détermination de la vitesse de l'UE à l'aide du NR-PRS reçu par l'UE (504, 506, 510).

5. Procédé selon la revendication 1, dans lequel le type de forme d'onde du NR-PRS reçu par l'UE comprend une forme d'onde de multiplexage par répartition orthogonale de la fréquence à préfixe cyclique, CP-OFDM.

6. Procédé selon la revendication 5, dans lequel la forme d'onde CP-OFDM du NR-PRS reçu par le UE comprend l'un des éléments suivants :
une séquence de modulation de fréquence linéaire discrète ayant une pente et une fréquence initiale configurables,
une séquence à autocorrélation nulle à amplitude constante codée en phase multi-porteuse, CAZAC,
une concaténation de séquences chirp dans au moins l'un parmi un domaine temporel et un domaine de fréquence,
une séquence multiplexée en fréquence d'ondes complémentaires, ou
une paire de séquences de Golay complémentaires.

7. Procédé selon la revendication 1, dans lequel l'UE (504, 506, 510) est l'un parmi une pluralité de dispositifs de l'internet des objets dans une cellule desservie par une station de base, le procédé comprenant en outre :
la réception, depuis la station de base, d'informations de configuration indiquant les paramètres pour le NR-PRS commun à la pluralité de dispositifs de l'internet des objets.

8. Procédé selon la revendication 7, dans lequel les informations de configuration sont reçues via une signalisation de contrôle de ressources radio, RRC, ou un canal partagé de liaison descendante physique, PDSCH, et une attribution pour le PDSCH transportant les informations de configuration est reçue dans un canal de commande de liaison descendante physique commun à un groupe, PDCCH.

9. Équipement utilisateur, UE, (504, 506, 510) pour la communication sans fil dans un système de communication conforme à la norme New Radio comprenant :
une mémoire ; et
au moins un processeur couplé à la mémoire et configuré pour
transmettre une indication d'au moins un parmi un exigence de positionnement ou une information de capacité de l'UE, la demande comprenant une indication d'une information de capacité de l'UE (504) et un exigence de positionnement qui indique un niveau d'exigence de positionnement parmi un ensemble de différents niveaux d'exigence de positionnement, dans lequel chaque niveau d'exigence de positionnement dans le ensemble de différents niveaux d'exigence de positionnement indique des paramètres correspondants associés à au moins l'un parmi une précision de télémétrie, un support de détermination de vitesse et une largeur de bande ; et
recevoir depuis la station de base en réponse à la demande, un signal de référence de positionnement New Radio, NR-PRS ayant des paramètres configurés dynamiquement sur la base d'au moins une parmi des exigences de positionnement ou des informations de capacité de l'UE incluses dans la demande de positionnement, les paramètres comprenant un ou plusieurs parmi un type de forme d'onde du NR-PRS, des ressources sur lesquelles le NR-PRS sera transmis, une numérologie associée au NR-PRS, une largeur de bande associée au NR-PRS, un précodage associé au NR-PRS, ou une périodicité associée au NR-PRS.

10. Procédé de communication sans fil réalisé par une station de base dans un système de communication du type New Radio, comprenant :
la réception (602) à partir d'un équipement utilisateur, UE, (504, 506, 510) au niveau de la station de base (502) une demande d'assistance au positionnement, la demande comprenant une indication d'une information de capacité de l'UE (504) et une exigence de positionnement qui indique un niveau d'exigence de positionnement parmi un ensemble de différents niveaux d'exigence de positionnement, chaque niveau d'exigence de positionnement dans l'ensemble de différents niveaux d'exigence de positionnement indiquant des paramètres correspondants associés à au moins l'un parmi une précision de télémétrie, un support de détermination de vitesse et une largeur de bande ;
la configuration dynamique, au niveau de la station de base (604), des paramètres associés à un signal de référence de positionnement, NR-PRS sur la base d'au moins l'une parmi des exigences de positionnement ou des informations de capacité, la configuration des paramètres comprenant la configuration d'un ou plusieurs parmi un type de forme d'onde des ressources NR-PRS, sur lesquelles le NR-PRS sera transmis, de la numérologie associée au NR-PRS, de la largeur de bande associée au NR-PRS, du précodage associé au NR-PRS, ou de la périodicité associée au NR-PRS ; et la transmission depuis la station de base du NR-PRS ayant les paramètres configurés vers le UE (504, 506, 510).

11. Le procédé selon la revendication 10, dans lequel l'UE (504, 506, 510) comprend un dispositif de l'Internet des objets, IoT, à bande étroite, et dans lequel la configuration des paramètres associés au NR-PRS comprend en outre la configuration d'un motif d'inhibition pour le NR-PRS afin de réduire les interférences intercellulaires ou dans lequel l'UE comprend un dispositif de l'Internet des objets, IoT, à large bande, et dans lequel la configuration des paramètres associés au NR-PRS comprend en outre la configuration d'un motif de saut de fréquence pour le NR-PRS.

12. Une station de base pour la communication sans fil dans un système de communication du type New Radio comprenant :
une mémoire ; et
au moins un processeur couplé à la mémoire et configuré pour :
recevoir (602) d'un équipement utilisateur, UE, (504, 506, 510) au niveau de la station de base (502) une demande d'assistance au positionnement, la demande comprenant l'indication d'information de capacité de l'UE (504) et une exigence de positionnement qui indique un niveau d'exigence de positionnement parmi un ensemble de différents niveaux d'exigence de positionnement, chaque niveau d'exigence de positionnement dans l'ensemble de différents niveaux d'exigence de positionnement indiquant des paramètres correspondants associés à au moins l'une parmi une précision de télémétrie, un support de détermination de vitesse et une largeur de bande ;
configurer dynamiquement des paramètres associés à un signal de référence de positionnement, NR-PRS, sur la base d'au moins l'une parmi l'exigence de positionnement ou des informations de capacité, la configuration des paramètres comprenant la configuration d'un ou de plusieurs parmi un type de forme d'onde du NR-PRS, des ressources sur lesquelles le NR-PRS sera transmis, la numérologie associée au NR-PRS, la largeur de bande associée au NR-PRS, le précodage associé au NR-PRS ou la périodicité associée au NR-PRS ; et
transmettre le NR-PRS ayant les paramètres configurés à l'UE (504).
